# EUROPÄISCHE PATENTSCHRIFT

(11) **EP 4 256 938 B1**
(45) Veröffentlichungstag und Bekanntmachung des Hinweises auf die Patenterteilung: **29.04.2026**
(21) Anmeldenummer: 23152558.5
(22) Anmeldetag: 20.01.2023
(51) Int. Cl.: A01D 34/00

(54) **VERFAHREN ZUM STEUERN EINES ARBEITSSYSTEMS SOWIE HIERFÜR GEEIGNETES ARBEITSSYSTEM**
METHOD FOR CONTROLLING A WORKING SYSTEM AND WORKING SYSTEM SUITABLE THEREFOR
PROCÉDÉ DE COMMANDE D'UNE SYSTÈME DE TRAVAIL ET SYSTÈME DE TRAVAIL APPROPRIÉ

(30) Priorität: 24.01.2022 DE 102022101572
(43) Veröffentlichungstag der Anmeldung: 11.10.2023
(73) Patentinhaber: Mulag Fahrzeugwerk Heinz Wössner GmbH u. Co. KG, 77728 Oppenau (DE)
(72) Erfinder: Meißner, Uwe, 77876 Kappelrodeck (DE); Weiß, Lukas, 77866 Rheinau (DE); Hüger, Thomas, 77704 Oberkirch (DE)
(74) Vertreter: Weickmann & Weickmann PartmbB

(56) Entgegenhaltungen:
- WO-A1-2018/086764
- US-A1- 2011 054 729
- US-A1- 2017 082 442
- US-A1- 2019 141 878
- US-A1- 2021 088 354
- US-A1- 2021 357 664

## Beschreibung

### I. Anwendungsgebiet

Die Erfindung betrifft ein Verfahren zum Steuern eines Arbeitssystems, welches umfasst
- wenigstens eine Arbeitsmaschine mit wenigstens einem 1. Arbeitskopf
- wobei sich die Arbeitsmaschine in einer Umgebung, insbesondere im Freien, bewegt und eine selbstfahrende oder auf einem Trägerfahrzeug montierte Arbeitsmaschine sein kann, die den mindestens einen Arbeitskopf aufweist,
- einer Steuerung zum Steuern des Arbeitssystems.

Das Arbeitssystem umfasst vorzugsweise auch mindestens einen weiteren Arbeitskopf, entweder als Bestandteil der gleichen Arbeitsmaschine oder als Bestandteil einer weiteren Arbeitsmaschine.

### II. Technischer Hintergrund

Eine solche Arbeitsmaschine kann eine Ausleger-Arbeitsmaschine sein, die auf einem Trägerfahrzeug montiert ist und einen Arbeitskopf, insbesondere einen Mähkopf zum Mähen der Randbereiche neben einer Fahrbahn, aufweist.

Der Steuerungsverfahren betrifft jedoch auch Arbeitssysteme mit anderen Arten von Arbeitsmaschinen, Arbeitsköpfen und Arbeitsaufträgen.

Ein oben genanntes Ausleger-Arbeitsmaschine besitzt einen, meist aus mehreren gelenkig miteinander verbundenen Armteilen bestehenden, Ausleger-Arm, dessen hinteres Ende an dem Träger-Fahrzeug befestigt werden kann und der am gegenüberliegenden vorderen Ende einen Arbeitskopf trägt.

Beispielsweise kann der Arbeitskopf ein Mähkopf sein, in dem eine Messerwelle horizontal rotiert oder mehrere um aufrechte Achsen rotierende Messer nebeneinander rotieren.

Üblicherweise wird der Arbeitskopf neben dem Träger-Fahrzeug mit seiner größten Erstreckungsrichtung quer zur Fahrtrichtung des Träger-Fahrzeuges gehalten, während das Träger-Fahrzeug vorwärtsfährt, sodass mit der Arbeitsmaschine beispielsweise der Untergrund bearbeitet werden kann, etwa gemäht oder gereinigt werden kann.

Dabei erstreckt sich bei einer Bauform der Arbeitskopf mit seiner größten Erstreckungsrichtung vom Befestigungspunkt am vorderen Arm-Ende des AuslegerArmes aus nach außen, also vom Träger-Fahrzeug weg, indem der Arbeitskopf an einem seiner in Querrichtung weisenden Enden, dem inneren Ende, mit dem Ausleger-Arm verbunden ist.

Der Arbeitskopf kann in der Regel gegenüber dem vorderen Ende des AuslegerArmes gesteuert um eine aufrechte Achse verschwenkt werden, manchmal zusätzlich auch um eine etwa in Fahrtrichtung horizontal verlaufende zweite Schwenkachse, um den Arbeitskopf an z.B. eine schräge Böschung neben der Fahrbahn, auf dem sich das Träger-Fahrzeug bewegt, parallel anpassen zu können.

Ein typisches Problem - gerade bei Mähköpfen zum Freimähen des Bewuchses neben dem Rand einer Fahrbahn - sind im Arbeitsbereich des Arbeitskopfes auftretende Hindernisse, etwa ein Straßenschild, welches im Abstand neben der Fahrbahn aufragt und welches von dem oben beschriebenen Arbeitskopf oder Mähkopf auf der Innenseite, also der zum Träger-Fahrzeug hinweisenden Seite, umfahren werden muss, wobei dabei möglichst wenig ungemähte Fläche übrigbleiben soll.

In diesem Zusammenhang ist es bekannt, an der Vorderseite eines solchen Arbeitskopfes eine etwa parallel zur Haupterstreckungsrichtung des Arbeitskopfes verlaufende Taststange gelenkig am Arbeitskopf anzuordnen, die in die nach vorn ausgeschwenkte, etwa parallele Lage zum Arbeitskopf vorgespannt ist und durch Anstoßen an einem Hindernis verschwenkt wird, und daraufhin um eine aufrechte Achse im Bereich seiner Verbindung zum Ausleger-Arm nach hinten schwenkt, wodurch er am Hindernis vorbei gefahren werden kann. Sobald die Taststange nicht mehr aus ihrer Ausgangslage verschwenkt ist, wird der Arbeitskopf wieder nach vorn in die etwa in Querrichtung liegende Ausgangsstellung zurückgeschwenkt.

Bei dieser Lösung ist die Schwenkachse der Taststange nahe an der Verbindungsstelle zwischen Ausleger-Arm und Arbeitskopf angeordnet, vorzugsweise sogar außerhalb des Arbeitsbereiches des Arbeitskopfes, um jedes im Arbeitsbereich, also der Arbeitsbreite, sich annäherndes Hindernis detektieren zu können.

Wenn Arbeits-Fahrzeuge zwei Ausleger-Arme mit je einem Arbeitskopf, beispielsweise Mähkopf, tragen, dann meist um eine breitere Spur neben dem Träger-Fahrzeug bearbeiten zu können. Am Beispiel des Mähkopfes werden die beiden Mähköpfe dann so geführt, dass der weiter innen liegende bei einem Hindernis auf dessen Innenseite vorbeigeführt wird, der weiter außen fahrende äußere Mähkopf dagegen auf der Außenseite vorbeigeführt wird, wobei dessen Auslegerarm das Hindernis übergreifen können muss.

Die Spuren der beiden Mähköpfe überlappen dabei etwas, um keinen ungemähten Streifen dazwischen entstehen zu lassen.

Dies führt allerdings dazu, dass bei einem wegen eines Hindernisses einklappenden inneren Mähkopf seitlich außerhalb des Hindernisses dann ein relativ großer ungemähter Bereich bis zur Innenkante der Spur des äußeren Mähkopfes übrigbleibt, was in der Regel manuelle Nachbearbeitung erfordert.

Ziel ist jedoch immer das Abmähen des Bewuchses bis unmittelbar an derartige Hindernisse heran.

Im Stand der Technik sind US 2021/088354 A1 und US 2021/357664 A1 bekannt, worin ein Verfahren entsprechend dem Oberbegriff von Anspruch 1 und ein Arbeitssystem entsprechend dem Oberbegriff von Anspruch 10 offenbart wird.

### III. Darstellung der Erfindung

### a) Technische Aufgabe

Es ist daher die Aufgabe gemäß der Erfindung, nach einem 1. Arbeitseinsatz die Planung und Durchführung eines weiteren Arbeitseinsatzes - was auch durchaus nur die Steuerung eines zweiten, dem 1. Arbeitskopf nachgeführten, Arbeitskopfes der gleichen Arbeitsmaschine und während des gleichen Arbeitseinsatzes sein kann - zu verbessern.

Dadurch soll auch der manuelle Steuerungsaufwand für den Bediener der Arbeitsmaschine, der meist gleichzeitig der Fahrer des Träger-Fahrzeuges ist, minimiert werden.

### b) Lösung der Aufgabe

Diese Aufgabe wird durch die Merkmale der Ansprüche 1 und 10 gelöst. Vorteilhafte Ausführungsformen ergeben sich aus den Unteransprüchen.

Das Arbeitssystem umfasst eine Arbeitsmaschine mit mindestens einem 1. Arbeitskopf, mindestens einem 2. Arbeitskopf und mindestens ein Trägerfahrzeug, das die Arbeitsmaschine mit dem zumindest einen ersten und dem zumindest einen zweiten Arbeitskopf trägt. Das Arbeitssystem kann eine Arbeitsmaschine umfassen, die zwei solcher Arbeitsköpfe trägt, die vorzugsweise unabhängig voneinander steuerbar sind und/oder das Arbeitssystem kann mehrere Arbeitsmaschinen umfassen, die mehrere Arbeitsköpfe, wiederum dann voneinander unabhängig steuerbar, umfassen.

Hinsichtlich des Verfahrens wird die bestehende Aufgabe dadurch gelöst, dass zunächst beim ersten Arbeitseinsatz von der Arbeitsmaschine, insbesondere deren wenigstens einem ersten Arbeitskopf, Daten gespeichert werden, die entweder während des Arbeitseinsatzes selbst ermittelt werden oder im Zusammenhang mit dem Arbeitseinsatz von einer externen Datenquelle, erhalten werden.

Dies kann nicht nur beim ersten von mehreren identischen oder ähnlichen Arbeitseinsätzen erfolgen, sondern auch bei weiteren solchen Arbeitseinsätzen.

Diese sogenannten Erstfahrt-Daten werden anschließend genutzt, um die Planung und/oder die Steuerung weiterer, insbesondere späterer, Arbeitseinsätze, die zu dem ersten Arbeitseinsatz identisch oder ähnlich sind, insbesondere an der gleichen Stelle stattfinden, etwa Müll einsammeln statt Gras abzumähen zu vereinfachen, wozu auch die datentechnische Beschreibung, also beispielsweise die datentechnische Bestands-Ermittlung, der Umgebung zählt.

Wenn bei einem solchen, insbesondere 1., Arbeitseinsatz eine Arbeitsmaschine mit zwei unabhängig steuerbaren Arbeitsköpfen, beispielsweise Mäh-Köpfen, verwendet wird, werden dabei
- die vom 1., insbesondere vorderen, Arbeitskopf her bekannten, insbesondere ermittelten, Daten sofort für die Steuerung des 2., insbesondere weiter hinten, geführten Arbeitskopfes beim selben Einsatz Arbeitseinsatz genutzt.

Insbesondere würden beide beim selben 1. Arbeitseinsatz genutzten Arbeitsköpfe jeweils Erstfahrt-Daten generieren.

Unter Bestands-Ermittlung an der Stelle des Arbeitseinsatzes oder in der Nähe des Arbeitseinsatzes werden neben der Gestaltung, etwa der Formgebung, der dortigen Umgebung auch der dortige Bewuchs verstanden oder dortige Hindernisse oder andere Faktoren, die den Arbeitseinsatz tangieren.

Unter beim Arbeitseinsatz ermittelten Daten werden solche verstanden, die mittels Sensoren, die sich am Arbeitsgerät oder an der Arbeitsmaschine befinden, ermittelt werden.

Unter von extern erhaltene Daten werden solche verstanden, die man insbesondere während des Arbeitseinsatzes, von einer externen Datenquelle erhält, beispielsweise GPS-Daten, DGPS-Daten, Funkzellen-Daten von einem benutzten Mobilfunknetz, Funkortungs-Daten, Daten von einem entfernten anderen Sender, der elektromagnetische Strahlung abgibt.

Die gespeicherten Erstfahrt-Daten können unterschiedliche Daten-Arten enthalten:
Zum einen die Weg-Daten, die den während des Arbeitseinsatzes zurückgelegten Weg protokollieren, sei es den Weg eines Arbeitskopfes oder der ganzen Arbeitsmaschine, also insbesondere von dessen Fahrgestell, und zwar vorzugsweise in absoluten Raumkoordinaten, vorzugsweise einschließlich der jeweils gefahrenen Fahr-Geschwindigkeit des Arbeitskopfes oder der gesamten Arbeitsmaschine.

Zum anderen können dies Betriebs-Daten, sei es die Antriebsleistung und/oder die Drehzahl des Antriebes und/oder beim Arbeitskopf oder dessen Auslegerarm die Stellung der Stellelemente, jeweils über die Länge des Arbeitseinsatzes, und zwar betreffend entweder den Arbeitskopf oder die gesamte Arbeitsmaschine, insbesondere deren Fahrgestell und Fahrantrieb.

Ferner können dies Umgebungs-Daten sein, welche die Umgebung, also den Bereich unmittelbar auf den Fahrspuren der Arbeitsköpfe liegend oder den Bereich in der näheren Umgebung darum herum, auch den Bereich vor oder neben der Fahrspur der gesamten Arbeitsmaschine, insbesondere des Trägerfahrzeuges, betreffen.

Dies kann die Kontur oder farbliche Gestaltung des Untergrunds, die Art des Bewuchses, die Feuchtigkeit des Bewuchses, das Vorhandensein und deren Position und / oder Größe von dort vorhandenen Hindernissen oder anderen markanten Stellen oder Gegenständen und Ähnliches sein.

All diese Daten müssen natürlich immer einen Koppel-Parameter, vorzugsweise die absolute Uhrzeit, mit enthalten, damit klar ist, zu welcher Zeit und vor allem an welcher Stelle des Fahrweges des Arbeitseinsatzes die entsprechenden Verhältnisse vorgelegen haben.

Vor allem die Umgebungs-Daten werden meist ermittelt durch Aufzeichnen von elektromagnetischer (EM) Strahlung, die insbesondere vorher ausgesandt und durch die Gegenstände der Umgebung reflektiert wurden, wobei die entsprechenden EM-Sensoren meist gleichzeitig als EM-Strahler ausgebildet sind oder ihnen ein EM-Strahler zugeordnet ist und in aller Regel Bestandteil des Arbeitsgerätes oder der Arbeitsmaschine sind, meist auf dem Fahrzeug möglichst erschütterungsarm montiert sind.

Bei solchen Sensoren kann es sich um beispielsweise um Infrarot-Sensoren und/oder Radar-Sensoren und/oder Lidar-Sensoren und/oder eine Wärmebild-Kamera und/oder eine Kamera für sichtbares Licht handeln.

Bei den DGPS-Daten handelt es sich primär um Korrekturdaten, die dem GPS-Empfänger des Arbeitsgerätes oder der Arbeitsmaschine von terrestrischen Referenz-Stationen aus übermittelt werden, und mit denen die noch ungenauen GPS-Positionsangaben wesentlich genauer festgelegt werden können.

Wenn auf diese Art und Weise sowohl die Arbeitsumgebung betreffende Daten als auch den konkreten Arbeitseinsatz betreffende, also auf Seiten des Arbeitsgeräts oder der Arbeitsmaschine vorliegende, Daten vorhanden sind, können vor allem für nachfolgende Arbeitseinsätze, beispielsweise den identischen Arbeitseinsatz, der wegen des nachwachsenden Bewuchses regelmäßig wiederholt werden muss oder eines Arbeitseinsatzes, der zwar einem anderen Zweck dient aber in der gleichen Umgebung stattfindet, die Planung und Steuerung solcher weiterer Arbeitseinsätze vereinfacht werden.

Gerade bei Arbeiten in der freien Umgebung ist es wichtig, dass für ein optimales Arbeitsergebnis das Arbeitsgerät exakt an der richtigen Stelle und im richtigen Umfang aktiv wird, was bisher hauptsächlich manuell von dem in der Fahrerkabine der Arbeitsmaschine sitzenden Bediener gesteuert wird, aber zum einen eine hohe Konzentration erfordert und zum anderen - gerade bei mehr als einem Arbeitskopf - so komplex ist, dass hierbei nur eine sehr geringe Fahrgeschwindigkeit der Arbeitsmaschine, also Fortschrittsgeschwindigkeit des Arbeitseinsatzes, möglich ist.

Bei einem Mähdrescher, der gerade Reihen von Mais abmäht, ist dabei eine Automatisierung relativ einfach, da er lediglich die Spur zwischen den Reihen einhalten muss und seine Antriebsleistung der abgemähten Menge an Mähgut anpassen muss und ansonsten am Ende der Spur den Arbeitseinsatz beenden und Wenden muss.

Bei Arbeitseinsätzen, bei denen die Fahrspur nicht gerade, sondern gekrümmt ist und / oder ganz unterschiedliche, vorher unbekannte Hindernisse auftauchen, mit denen umgegangen werden muss, ist dies wesentlich schwieriger.

Unter Verfügbarkeit der vorgenannten Daten kann jedoch beispielsweise wie folgt vorgegangen werden:
Als Schritt a) wird von einer Stelle in der Nähe des Beginns, also vor dem Beginn oder am Beginn oder kurz nach dem Beginn des Fahrweges des Arbeitskopfes oder des Fahrgestells der Arbeitsmaschine für diesen Arbeitsauftrag, meist von einer markanten Stelle wie einem Hindernis oder jedenfalls einer über lange Zeit vermutlich unverändert bestehenden und wiedererkennbaren, markanten Stelle die exakte Position bestimmt.

Dabei wird unter einer exakten Position eine Positionsangabe verstanden, die wesentlich genauer ist als die auf ein oder einige Meter genaue GPS-Position, sondern die eine Genauigkeit von +/- wenigen Zentimetern aufweist, wie sie beispielsweise mittels DGPS ermittelbar ist, für eine solche markante Stelle wird also diese exakte Position ermittelt oder sie ist aus anderer Quelle, beispielsweise aus vorliegenden Vermessungs-Daten, z.B. der öffentlichen Hand bereits bekannt wie dies etwa bei Grenzsteinen der Fall ist.

Da die Weg-Daten und Betriebs-Daten und auch Umgebungs-Daten - nicht nur mit GPS-Genauigkeit, sondern eventuell korrigiert mit Hilfe von Korrektur-Daten des DGPS-Systems - ebenfalls bekannt sind, kann gemäß Schritt b) ausgehend von einer solchen markanten hinsichtlich der Position exakt bestimmten Stelle von dort aus die auf dem Fahrweg des Arbeitskopfes und/oder der Arbeitsmaschine vorhandenen Elemente nicht nur vorab ermittelt werden, sondern aufgrund beispielsweise der Betriebs-Daten und Weg-Daten kann der Arbeitskopf und / oder dir Arbeitsmaschine bereits diese Elemente, insbesondere Hindernisse, in ihrem Fahrweg bereits optimal anfahren, also mit optimal hoher Geschwindigkeit möglichst lange darauf zufahren und erst kurz zuvor beispielsweise die Fahrgeschwindigkeit reduzieren und/oder die Antriebsleistung für den Arbeitskopf erhöhen oder erniedrigen usw., dass insgesamt der Arbeitseinsatz optimiert wird.

Dies kann zum einen bedeuten, dass bei einem Mähkopf das Freimähen um die Hindernisse herum sehr präzise geschieht, ohne größere ungemähte Flächen und/oder dass das erzielte Mähbild hinsichtlich Gleichmäßigkeit der Mähhöhe sehr gut ist und/oder das der Arbeitseinsatz in einer optimal niedrigen Zeit bewältigt werden kann.

Dies wird vorzugsweise durchgeführt bis zum Ende des Arbeitseinsatzes, vorzugsweise dabei bis zu einer weiteren markanten Stelle an oder nahe dem Ende des Arbeitseinsatzes, beispielsweise kurz vor Ende des Arbeitseinsatzes, denn dann ist es möglich, diese andere ebenfalls hinsichtlich der exakten Positionierung bekannte Stelle, insbesondere eine weitere markante Stelle, zu vergleichen mit den Daten, insbesondere der Position, die ermittelt wurde aus der Position der ersten oder einer anderen vorangehenden markanten exakt positionierten Stelle und den aus den Weg-Daten und/oder Betriebs-Daten des Arbeitskopfes und / oder Arbeitsmaschine weiter berechneten Positions-Daten.

Sollten die weiterberechneten Positions-Daten und die vorhandenen oder ermittelten exakten Positions-Daten dieser weiteren markanten Stelle differieren, können sie - auch bereits beim ersten Arbeitseinsatz - die Weg-Daten und Betriebs-Daten, ggfs. auch die Umgebungs-Daten - falls sie die markante Stelle enthalten - um entsprechende Korrekturwerte korrigiert werden, sodass für nachfolgende Arbeitseinsätze diese Daten eher der Realität entsprechen.

Dabei kann für nachfolgende Arbeitseinsätze durchaus entschieden werden, ob die korrigierten oder die unkorrigierten Weg-Daten und/oder Betriebs-Daten und/oder Umgebungs-Daten benutzt werden, denn dies kann von aktuellen Umgebungseinflüssen abhängen:
Wenn beispielsweise bei der Ermittlung der Weg-Daten und Betriebs-Daten nasses Wetter und ein nasser Untergrund gegeben waren, kann Schlupf zwischen den Antriebsrädern des Fahrgestells und dem Untergrund und/oder zwischen körperlich abtastenden Weg-Sensoren wie Abtast-Walzen oder Abtast-Rollen und dem Untergrund dazu führen, dass die Weg-Daten und/oder Betriebs-Daten und in der Folge auch die Umgebungs-Daten nicht die korrekten Positionen und Abmessungen von Hindernissen und anderen Elementen der Umgebung ergeben.

Herrschen zum Zeitpunkt des erneuten Arbeitseinsatzes die gleichen Bedingungen, ist es sinnvoll, eher die unkorrigierten Daten zu verwenden, herrschen dagegen bessere oder optimale Bedingungen, ist es sinnvoller, die korrigierten Daten zu verwenden.

Falls die exakte Position einer exakt zu definierenden Stelle, insbesondere einer sogenannten markanten Stelle, nicht bekannt ist und auch kein DGPS-System zur Verfügung steht, um dies zu erreichen, kann dies auch auf andere Art und Weise erreicht werden:
Eine Möglichkeit besteht darin, eine sogenannte mobile terrestrische Referenz-station zu verwenden, die man an oder auf die exakt zu positionierende Stelle stellt.

Diese kann ein kontaktloses Entfernungs-Messsystem gegenüber einem Gegenelement in oder am Arbeitskopf oder der Arbeitsmaschine enthalten worüber deren Steuerung einen sehr exakten Abstand zu der Referenzstation ermittelt, und insbesondere, wenn mehr als eine Referenzstation gleichzeitig verwendet werden, kann über Winkelberechnung sehr exakt die momentane Position sowohl des Gegenelementes - also des Arbeitskopfes oder der Arbeitsmaschine - in Relation zu den beiden Referenzstationen ermittelt werden, was ebenfalls ein sehr guter Ausgangspunkt für die weitere Durchführung des Arbeitseinsatzes mit Hilfe der vorhandenen Weg-Daten und Betriebs-Daten ist.

Eine andere Möglichkeit besteht darin, dass bei lediglich vorhandenen GPS-Daten aber keinen DGPS -Daten bei mehreren Arbeitseinsätzen hintereinander für die gleiche Stelle, insbesondere markante Stelle, die GPS-Daten ermittelt werden, die dann möglicherweise auch differieren.

Durch Mittelung solcher unterschiedlicher erhaltenen GPS-Daten für die gleiche Stelle kann die Positionierung dieser Stelle wesentlich exakter erfolgen als mit nur einer GPS-Positionsbestimmung.

Eine weitere Möglichkeit besteht darin, die GPS-Daten mit den Funkzellen-Daten eines Mobilfunknetzes zu überlagern, vorzugsweise mit den Funkzellen-Daten von mehreren zu Verfügung stehenden Mobilfunknetzen, da sich aus der Summe der Positionierungs-Aussagen dann in der Regel eine Verbesserung der Genauigkeit der Positions-Ermittlung erreichen lässt.

Wenn dies für mehrere identische Arbeits-Einsätze oder identischen Abschnitten von Arbeits-Einsätzen hintereinander durchgeführt wird und die ermittelten oder empfangenen Daten verglichen werden, können sie auch interpoliert werden, was die Genauigkeit weiter erhöht.

Nicht nur die direkte Steuerung weiterer Arbeitseinsätze wird auf diese Art und Weise erleichtert, sondern auch die Planung solcher Arbeits-Einsätze, beispielsweise aufgrund der Vergangenheits-Erfahrungen aus der ermittelten Höhe des vorhandenen Bewuchses in Relation zu dem zeitlichen Abstand zur vorhergehenden Mäh-Vorgängen und/oder den dazwischen gefallenen Niederschlagsmengen und/oder der entsprechend vorherrschenden Jahreszeit.

Ferner lassen die vorhandenen Daten, insbesondere Umgebung-Daten, auch eine Bestandsaufnahme und damit Analyse des Zustands der Umgebung zu, sei es hinsichtlich des Bewuchses aber auch vorhandener Hindernisse und ggfs. deren Veränderung, was in die Planung zukünftiger Arbeits-Einsätze oder anderer in dieser Umgebung notwendige Arbeiten einfließen kann.

Wenn der Arbeitseinsatz das Herumführen des Arbeitskopfes auf der dem Träger-Fahrzeug zugewandten Innenseite erfordert, wird zunächst
- als Umgebungs-Daten die Querposition des Hindernisses, insbesondere auch seine momentane Längs-Position zur Taststange und damit dem Arbeitskopf, ermittelt,
- als auch als Betriebs-Daten des Fahrgestells die Vorwärts-Geschwindigkeit des Arbeitskopfes ermittelt oder zur Verfügung gestellt, beispielsweise in Form der Fahrgeschwindigkeit des Trägerfahrzeuges durch die Steuerung des Trägerfahrzeuges, unter Berücksichtigung der gleichzeitigen Bewegungen des Arbeitskopfes.

Diese Querposition zusammen mit der ermittelten oder bekannten Ist-Position des Arbeitskopfes oder der gesamten Arbeitsmaschine können als Umgebungs-Daten für spätere Arbeitseinsätze gespeichert werden

Die Fahrgeschwindigkeit des Trägerfahrzeuges kann nicht nur von der FahrzeugSteuerung erhalten werden, sondern auch mittels eines separaten Sensors am Mähkopf selbst ermittelt werden.

Anschließend wird
- abhängig von diesen beiden Parametern und der Ausgangs-Schwenkstellung des Arbeitskopfes Zeitpunkt und/oder Zeitdauer des verschwenkten Zustandes und/oder Schwenkwinkel der Verschwenkung des Arbeitskopfes um die aufrechte Schwenkachse, also das Z-Gelenk, bestimmt,
- der Arbeitskopf in Kenntnis der Relativ-Position des Hindernisses durch Steuerung des Schwenkvorganges des Arbeitskopfes möglichst eng um das Hindernis herumgeführt wird und
- danach der Arbeitskopf wieder in seine Ausgangs-Schwenkstellung zurück verschwenkt.

Diese Weg-Daten des Arbeitskopfes können gespeichert werden und spätere Arbeitseinsätze erleichtern.

Dabei wird das Verschwenken insbesondere so gesteuert, dass die Taststange immer in Kontakt mit dem Hindernis bleibt, und das Zurückschwenken in die Ausgangsstellung erst erfolgt, wenn die Taststange durch das Hindernis nicht mehr ausgelenkt ist.

Durch Kenntnis der Relativposition des Hindernisses zum Arbeitskopf kann dieser sehr eng um das Hindernis herumgeführt werden.

Dabei wird die Querposition des Hindernisses vorzugsweise mittels einer am vorderen Ende des Arbeitskopfes schwenkbar um eine aufrechte Schwenkachse beweglich befestigten und sich in der Aufsicht betrachtet quer zur Fahrtrichtung erstreckenden Taststange ermittelt, indem
- die Geschwindigkeit der Schwenkbewegung der Taststange ab dem Kontaktieren des Hindernisses ermittelt wird und
- unter Berücksichtigung der Vorwärts-Geschwindigkeit des Arbeitskopfes
- daraus die Querposition ermittelt wird.

### (Kurvenfahrt:)

Wenn Hindernisse - die als Umgebung-Daten aus vorherigen Arbeit-Einsätzen bekannt sein können oder beim 1. Arbeit-Einsatz deshalb hinsichtlich ihrer Position bestimmt werden - immer im gleichen Abstand zum Fahrbahn-Rand angeordnet sind und in kurzen, insbesondere regelmäßigen, Abständen vorhanden sind, insbesondere die Tragpfosten von Leitplanken, ist es ein Problem, dass bei Kurvenfahrt wegen des relativ weit vor dem Trägerfahrzeug laufenden inneren Arbeitskopfes die Hindernisse an gegenüber geradeaus weitergehender Fahrbahnkante abweichenden Querpositionen auftreffen.

Um dies zu vermeiden, kann automatisch ermittelt werden, ob der Auftreffpunkt auf der Taststange in Querrichtung von Hindernis zu Hindernis jeweils gleich bleibt oder in Querrichtung abwandert und in letzterem Fall - der eine Kurvenfahrt bedeutet - der Mähkopf mittels seines Auslegerarmes in Querrichtung so verstellt werden, dass die Querposition des Auftreffpunktes gleich bleibt, also wieder der gleiche Auftreffpunkt ist wie bei gerader Fahrbahnkante und gleich bleibenden Abstand der Hindernisse zur Fahrbahnkante.

Hinsichtlich des Arbeitssystems wird diese Aufgabe dadurch gelöst, dass zum einen wenigstens eine 1. Arbeitsmaschine und gegebenenfalls weitere Arbeitsmaschinen mit jeweils wenigstens einem 1. Arbeitskopf und jeweils weiteren Arbeitsköpfen vorhanden ist, und zum anderen, dass dessen bzw. deren Steuerung in der Lage ist, das zuvor beschriebene Verfahren durchzuführen.

Es sollte hierfür die entsprechende technische Ausstattung beim Arbeitssystem vorhanden sein, insbesondere die entsprechende Sensorik,
- insbesondere ein Empfänger für elektromagnetische Strahlung
   und/oder
- ein GPS-Empfänger
   und/oder
- ein DGPS- Empfänger
   und/oder
- eine mobile terrestrische Referenz-Station
   und/oder
   - ein Datenspeicher für ermittelte oder von extern empfangenen Daten und/oder
- eine Recheneinheit zum Ermitteln von Korrektur-Daten
   und/oder
- ein Funkempfänger oder einen Internetanschluss, insbesondere zum Empfangen von Korrekturwerten von terrestrischen Referenzstationen, insbesondere dem deutschen Sapos-System
   und/oder
- eine mobile terrestrische Referenzstation
   und/oder
   Kommunikationskanäle zwischen den einzelnen Geräten, insbesondere auch den mehreren Arbeitsköpfen.

In der Bauform als Ausleger-Arbeitsmaschine des Arbeitssystems kann diese zunächst einmal den Auslegerarm selbst umfassen, der meist aus mehreren gelenkig miteinander verbundenen Armteilen besteht und dessen hinteres Ende zum Befestigen an einem Trägerfahrzeug der selbstfahrenden Arbeitsmaschine ausgebildet ist.

Darüber hinaus besitzt der Auslegerarm an seinem vorderen Ende ein Armende, welches gegenüber dem Rest des Auslegerarms mittels eines Z-Gelenkes um eine als Z-Achse bezeichnete, aufrecht stehende, Achse verschwenkt werden kann, und an dem der Arbeitskopf mittels seines dem Auslegerarm zugewandten Kopfendes befestigt werden kann, z.B. durch Verschraubung oder Verrastung.

Zusätzlich kann zwischen Auslegerarm und Arbeitskopf ein X-Gelenk vorhanden sein, mittels dessen der Arbeitskopf um eine quer, insbesondere lotrecht, zur Z-Achse verlaufende X-Achse verschwenkbar ist, die vorzugsweise in Fahrtrichtung des Trägerfahrzeuges etwa horizontal verläuft. Das X-Gelenk kann vor oder hinter - in Verlaufsrichtung des Auslegerarmes - des Z-Gelenkes angeordnet oder mit diesem funktionsvereinigt sein.

Eine Hindernis-Einheit des Arbeitskopfes kann so ausgebildet sein, dass sie in der Lage ist, nicht nur prinzipiell das Annähern und insbesondere Kontaktieren eines Hindernisses am Arbeitskopf zu ermitteln, sondern auch dessen Lage in Querrichtung relativ zu der Hindernis-Einheit, die jedoch in Querrichtung an einer festen Querposition am Arbeitskopf angeordnet ist.

Die Steuerung soll so ausgebildet sein, dass sie in der Lage ist, in Kenntnis der ermittelten Querposition als auch der Vorwärts-Geschwindigkeit des Arbeitskopfes den Arbeitskopf sehr nahe um das Hindernis herumzuführen durch gezielte Steuerung der Einklapp-Bewegung des Arbeitskopfes.

Dabei soll die Hindernis-Einheit insbesondere in der Lage sein zu ermitteln, ob es sich um starres und damit zu umfahrendes Hindernis handelt oder um ein so elastisches Hindernis wie hohes Gras oder niedrige elastische Büsche, das nicht umfahren werden muss, sondern der Arbeitskopf darüber hinweg geführt werden kann.

Bei der Hindernis-Einheit kann es sich um eine kontaktierend arbeitende Hindernis-Einheit handeln, bei der etwa die bereits bekannte Taststange mit zugehörigem Taster Verwendung finden kann, oder auch eine berührungslos arbeitende Hindernis-Einheit wie etwa ein optischer Sensor oder eine andere Art von elektromagnetischen Wellen aussendender Sensor, der die vom Hindernis reflektierten Wellen empfängt und damit das Hindernis und dessen Querposition und insbesondere sogar dessen Dicke quer zur Fahrtrichtung detektiert, bevor der Arbeitskopf das Hindernis erreicht.

Da im rauen Arbeitseinsatz jedoch nach wie vor mechanische Lösungen bevorzugt werden, wird im Folgenden eine kontaktierend arbeitende Hindernis-Einheit weitergebildet, die die bekannte Taststange aufweist sowie einen Sensor zum Ermitteln der Schwenkbewegung der Taststange.

Ebenso wäre eine Taststange möglich, die nicht um eine aufrechte Achse verschwenkt wird, sondern beidseits am Arbeitskopf befestigt ist und relativ zu diesem entgegen der Fahrtrichtung eingeschoben oder nach unten oder oben geschwenkt werden kann, was wiederum mittels eines Sensors detektiert werden kann.

Jeder Sensor und jedes Sensor-Prinzip kann verwendet werden, welches geeignet ist, die Geschwindigkeit der Drehung der Taststange um deren Schwenkachse, also letztendlich die Winkel-Geschwindigkeit, oder Bewegung der Taststange entgegen der Vorwärts Richtung zum Gehäuse des Arbeitskopfes zu bestimmen.

Das Ziel besteht bei einer verschwenkenden Taststange darin, mindestens zwei von der Ausgangsstellung sowie zueinander unterschiedliche Schwenklagen der Taststange zu detektieren, z.B., mittels eines Drehwinkel-Sensors, der an oder in der Schwenkachse angeordnet sein kann und das Verschwenken der Taststange detektiert, vorzugsweise in einem Weg-Zeit-Diagramm aufnimmt.

Die Querposition des Hindernisses relativ zur Taststange und damit dem Arbeitskopf kann ermittelt werden, da bei gleichbleibender Vorwärts-Geschwindigkeit des Arbeitskopfes nach Kontaktieren des Hindernisses die Schwenk-Bewegung der Taststange umso schneller erfolgt, je näher sich in Querrichtung das Hindernis an der aufrechten Schwenkachse der Taststange befindet.

Ob es sich um ein starkes oder ein elastisches Hindernis handelt, kann ermittelt werden aus der Beschleunigung der Auslenkbewegung der Taststange:
Bei einem sehr starren Hindernis wird die Taststange zunächst sehr schnell beschleunigt, aber ihre weitere Bewegungs-Geschwindigkeit danach bleibt im Wesentlichen konstant und ist abhängig der Querposition des Hindernisses, also dem Abstand zur aufrechten Schwenkachse. Bei einem elastischen Hindernis nimmt die Beschleunigung der Taststange über einen längeren Zeitraum zu als beim starren Hindernis und geht erst dann in eine etwa konstante Bewegungs-Geschwindigkeit über.

Ob ein singuläres Hindernis mit einer begrenzten, kleinen Erstreckung in Querrichtung vorliegt, oder ein so genanntes flächiges Hindernis, welches sich über größere Bereiche in Querrichtung an der Taststange anliegt, lässt sich ermitteln etwa durch Zusatzmaßnahmen dahingehend, dass an mehreren Punkten entlang der Taststange in Querrichtung deren Biegebelastung im Einsatz ermittelt wird, beispielsweise mittels Dehnmess-Streifen:
Bei einem singulären Hindernis ist die Taststange lediglich vom Kontaktpunkt mit dem Hindernis aus in dem Bereich zur aufrechten Schwenkachse hin auf Biegung belastet, und zwar in diesem Bereich etwa gleich hoch belastet, in dem anderen Bereich zum freien Ende der Taststange hin dagegen nicht.

Bei einem flächigen Hindernis dagegen nimmt die Belastung in dem belasteten Bereich vom radial inneren, also der aufrechten Schwenkachse benachbarten, Ende zum gegenüberliegenden Ende des belasteten Bereiches ab.

Vorzugsweise ist die Schwenkachse außerhalb des Arbeitsbereiches des Arbeitskopfes angeordnet, um Hindernisse detektieren zu können, unabhängig davon, wo sie sich innerhalb des Arbeitsbereiches, also der Arbeitsbreite, des Arbeitskopfes befinden.

Vorzugsweise befindet sich die Schwenkachse am innenseitigen Ende des Arbeitskopfes, dort vorzugsweise beabstandet zum inneren Ende des Arbeitsbereiches.

Bevorzugt sollte die Steuerung auch so ausgebildet sein, dass sie in der Lage ist, aus den von der Hindernis-Einheit erhaltenen Daten zu ermitteln, ob es sich um ein starres Hindernis handelt, welches von dem Mähkopf umfahren werden muss, oder ein elastisches Hindernis, welches überfahren und bearbeitet, beispielsweise abgemäht, werden soll.

Bei einer Ausleger-Arbeitsmaschine mit einem zweiten Ausleger-Arm mit einem daran befestigten zweiten Arbeitskopf, insbesondere Mähkopf, bei dem im Arbeitseinsatz die beiden Arbeitsköpfe seitlich versetzt zueinander gehalten und gesteuert werden um beispielsweise beim Mähen eine etwa doppelt breite Spur mit einer Durchfahrt des Arbeits-Fahrzeuges erzielen zu können, sollte die Steuerung so ausgebildet sein, dass sie in der Lage ist, für das Steuern des zweiten und ggfs. eines weiteren dritten Arbeitskopfes die ermittelte Querposition des Hindernisses zur berücksichtigen und insbesondere den zweiten, typischerweise auf der Außenseite des Hindernisses vorbeifahrenden Arbeitskopf möglichst nah, insbesondere automatisch, an dieser Außenseite des Hindernisses vorbeizusteuern, um dort ungemäht verbleibende Flächen zu minimieren.

### (Entkoppeln:)

Für die unabhängige Steuerung des innen fahrenden Arbeitskopfes sollte die Steuerung so ausgebildet sein, dass die automatische Nachführung des außen laufenden Arbeitskopfes gegenüber dem innen laufenden Arbeitskopf manuell abgeschaltet werden kann. Denn dadurch würde während dieser abgeschalteten Zeit der außen laufende Arbeitskopf samt seines Auslegerarmes seine Position zum Trägerfahrzeug zum Abschaltzeitpunkt beibehalten.

Dies ist für einige Arbeitssituationen sehr nützlich.

### (Flipper-Betrieb:)

In einer speziellen Ausführungsform für eine Tandem-Arbeitsmaschine mit zwei Arbeitsköpfen und Auslegerarmen kann an beiden Auslegerarmen jeweils ein mit einer Hindernis-Einheit und dementsprechend auch insbesondere mit einer Taststange mit Schwenk-Sensor ausgestatteter Arbeitskopf befestigt sein, wobei der außen laufende Arbeitsköpf mit seinem äußeren Ende und der innen laufende Arbeitskopf mit seinem inneren Ende an ihrem jeweiligen Auslegerarm gehalten sind.

Dadurch können beide Arbeitsköpfe nach Aktivieren ihrer Taststange verschwenkt und auf ihrer Seite am Hindernis vorbeigeführt werden, wodurch der Mähschatten, also die ungemäht verbleibende Fläche um das Hindernis herum, reduziert werden kann.

Generell sollte die Hindernis-Einheit so ausgebildet sein, dass sie in der Lage ist, die Position des auftreffenden Hindernisses in Querrichtung relativ zum Trägerfahrzeug zu ermitteln.

Dies kann beispielsweise erreicht werden, indem zumindest in den Schwenk-Gelenken mit einer aufrechten Schwenkachse, insbesondere in allen Schwenk-Gelenken zwischen den einzelnen Armteilen sowie zwischen Auslegerarm und Trägerfahrzeug und zwischen Auslegerarm und dem daran gehaltenen Arbeitskopf Sensoren vorhanden sind, die die Schwenkstellung des Gelenkes detektieren und an die Steuerung melden.

Dadurch ist die Querposition von auftretenden Hindernissen nicht nur relativ zum Arbeitskopf, sondern auch relativ zum Trägerfahrzeug ermittelbar.

### (Kurvenfahrt:)

Da sich der innen laufende Arbeitskopf um ca. 2 - 3 m vor der Front des Trägerfahrzeuges befindet, wandert ein immer gleich weit seitlich vom Straßenrand beabstandetes Hindernis wie Tragpfosten - deren Position vorzugsweise in Form von Umgebungs-Daten bekannt sind - einer parallel zum Straßenrand verlaufenden Leitplanke relativ zum Trägerfahrzeug - und bei konstant relativ dazu eingestelltem Arbeitskopf auch relativ zum Arbeitskopf - nach außen, wenn - bei auf der rechten Fahrspur fahrenden Trägerfahrzeug - z.B. eine Rechtskurve beginnt und sich fortsetzt.

Um zu vermeiden, dass der z.B. Mähkopf dann weniger weit unter die Leitplanke hinein auftaucht, kann in diesem Fall des nach außen wandernden Kontaktpunktes der Mähkopf weiter nach außen verstellt werden, bis die Kurve zu Ende ist.

### c) Ausführungsbeispiele

Ausführungsformen gemäß der Erfindung sind im Folgenden beispielhaft näher beschrieben. Es zeigen:
- **Figur 1:**: eine Arbeitsmaschine mit zwei Ausleger-Mähgeräten in der Aufsicht von oben bei einem anspruchsvollen Arbeitsauftrag,
- **Figur 2a, b:**: eine Arbeitsmaschine in Form eines Trägerfahrzeuges mit zwei Ausleger-Mähgeräten gemäß Figur 1 in Frontansicht sowie in der Aufsicht von oben,
- **Figur 3:**: den im Arbeitseinsatz außen fahrenden der beiden Mähköpfe in vergrößerter Einzeldarstellung in Frontansicht,
- **Figur 4a-c:**: die Nachführung des äußeren Mähkopfes bei Auslenkung des inneren Mähkopfes durch ein Hindernis,
- **Figur 5:**: die erfindungswesentlichen Parameter dargestellt an dem inneren Mähkopf in der Aufsicht,
- **Figur 6:**: zwei Mähköpfe im Flipper-Betrieb.

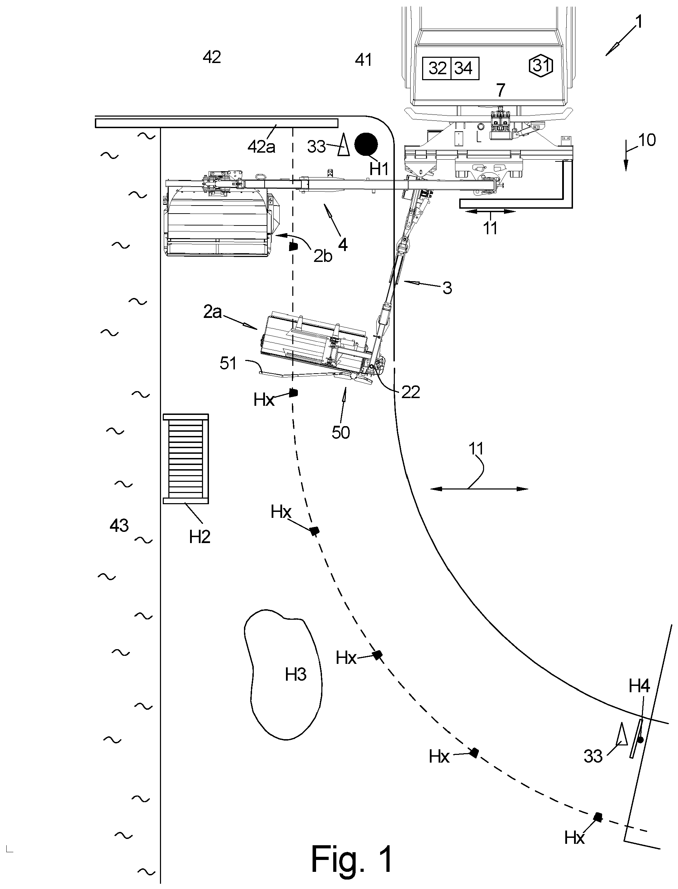

**Figur 1** zeigt einen typischen anspruchsvollen Arbeitseinsatz eines sogenannten Tandem-Mähers mit zwei unabhängig voneinander steuerbaren Mäh-Köpfen 2a, b, die beide vom gleichen Bediener und gleichzeitig Fahrer des Trägerfahrzeuges 7 gesteuert werden sollen, in der Aufsicht von oben:
Zum einen muss das Abmähen unmittelbar hinter einer Straßen-Einmündung 41, die hier noch dazu über eine Brücke 42 mit einem Brückengeländer 42a im Mäh-Bereich führt, begonnen werden, wobei sich im Anfangsbereich des Arbeitsauftrages auch noch ein 1. Hindernis H1 befindet.

Des Weiteren sind im Verlauf des Arbeitsbereiches weitere Hindernisse H2 und H3 zu berücksichtigen, die umfahren werden müssen, wie etwa eine Bank und ein Felsen in der Mähspur des äußeren Mähkopfes 2b oder ein Hindernis H4 in Form eines Verkehrsschildes unmittelbar vor der Einfahrt dieser Straße in einem Tunnel.

Ferner vollzieht die Straße, auf der das Trägerfahrzeug fährt, und damit auch deren Fahrbahnrand 40, nach einer geraden Strecke eine Kurve.

Die Problematik bei einer Kurvenfahrt des Trägerfahrzeuges 7 besteht darin, dass die regelmäßig wiederkehrenden Hindernisse Hx wie etwa die Tragpfosten von Leitplanken-Anlagen, die sich in einem immer gleichbleibenden Abstand zur Fahrbahnkante 40 befinden, auf dem entsprechenden Mähkopf 2a zumindest zu Beginn der Kurvenfahrt an nicht mehr gleichbleibenden, sondern unterschiedlichen Auftreff-Stellen in Querrichtung 11 auftreffen.

Da sich gerade der innen laufende Mähkopf 2a etwa 2 bis 3 m vor der Front des Trägerfahrzeuges 7 befindet, fährt vor dem Beginn einer Kurve das Trägerfahrzeug geben noch entlang der geraden Fahrbahnkante 40, während am Mähkopf 2a bereits Hindernisse Hx auftreffen, die sich schon im Bereich der Kurve der Fahrbahnkante 40 befinden.

Deshalb wird zu Beginn der Kurve und/oder während der gesamten Kurvenfahrt - wie in **Figur 1** bei Rechtsverkehr und einer Linkskurve dargestellt - der Auftreffpunkt des Hindernisses Hx auf der Taststange 51 gegenüber einem geraden Straßenabschnitt nach innen wandern wird und somit der Mähkopf 2a weiter als bisher über die Hindernisse Hx nach außen vorstehen wird.

Da immer gleiche Arbeitsverhältnisse angestrebt werden, will man dies vermeiden, wozu von der Steuerung automatisch detektiert wird, ob sich bei regelmäßig auftauchenden Hindernissen Hx - bei denen man einen immer gleichen Abstand zur Fahrbahnkante 40 unterstellt - der Auftreffpunkt der Hindernisse Hx auf dem Mähkopf 2a, insbesondere dessen Taststange 51, in Querrichtung 11 verschiebt.

Falls ja, wird dies durch Verschwenken des den Mähkopf 2a tragenden Auslegerarmes 3 um seine aufrechte Achse gegenüber dem Trägerfahrzeug 7, also am Verschiebeschuh 24, ausgeglichen, und am Ende der Kurve beim Übergang in einen geraden Straßenabschnitt analog umgekehrt vorgegangen.

Stattdessen oder zusätzlich als Unterstützung können der Steuerung jedoch Daten aus beispielsweise dem gleichen Arbeitseinsatz einige Wochen oder Monate zuvor vorliegen, was das präzise Freimähen um die Hindernisse herum erleichtert:
Zunächst einmal kann die Steuerung aufgrund der bei dem vorherigen ähnlichen oder gleichen Arbeitseinsatz mittels einer GPS-Antenne 31 - hier am Trägerfahrzeug 7 montiert - gespeicherten GPS-Daten automatisch erkennen, dass der beginnende Arbeitseinsatz an der gleichen Stelle stattfindet, und die entsprechenden Daten des vorherigen Arbeitseinsatzes im Speicher auswählen.

Es ist offensichtlich, dass das dem Trägerfahrzeug 7 zugewandte Ende des Brückengeländers 42a vor Beginn des Grünstreifens eine markante Stelle darstellt, da die beiden Mähköpfe erst dahinter von der Fahrbahn aus seitlich auf den Randstreifen ausgefahren werden können.

Sollte sich in Fahrtrichtung 10 des Trägerfahrzeuges 7 unmittelbar nach dem Brückengeländer 42a ein weiteres dauerhaftes Hindernis H1 befinden, so gilt dies auch für dieses Hindernis H1.

Somit ist es hilfreich, wenn die Position dieser markanten Stelle, sei es des Endes des Brückengeländers 42a oder des Hindernisses H1, in absoluten Raum-Koordinaten bekannt ist, etwa durch Speicherung der GPS-Daten, oder an welcher Stelle des Fahrweges beim vorhergehenden Arbeitseinsatz die beiden Mähköpfe 2a, 2b seitlich über den Grünstreifen ausgefahren wurden.

Dies nützt umso mehr, je exakter die Position dieser markanten Stelle bekannt ist, denn die Genauigkeit normaler GPS-Daten von einigen Metern ist hierfür noch nicht ausreichend.

Um eine Positionierung auf eine Genauigkeit von deutlich unter 1 m, insbesondere unter 20 cm, zu bringen, müsste die Position der markanten Stelle und/oder der Ausfahr-Position des Trägerfahrzeuges 7, an der dieses beim letzten Arbeitseinsatz die Mähköpfe seitlich ausgefahren hatte, exakt bestimmt werden.

Für einige markante Stellen liegen hierfür exakte Vermessungsdaten vor, die bei offiziellen Stellen abgerufen werden können.

Ansonsten kommt eine exakte Vermessung dieser markanten Stelle durch DGPS infrage, bei dem von wesentlich näher liegenden ortsfesten, terrestrischen Referenzstationen 33 die exakten, meist manuell ermittelten, Vermessungsdaten vorliegen, die mit den per GPS ermittelten Positionen dieser Referenzstationen 33 verglichen werden und daraus Korrekturwerte ermittelt werden, die dem Nutzer an die Hand gegeben werden, um die GPS-Daten der Stelle, deren Position er bestimmen möchte, um analoge oder interpolierte Korrekturwerte zu korrigieren, womit Genauigkeiten von unter 10 cm, teilweise unter 2 cm, erreicht werden können.

Ist eine solche ortsfeste, terrestrische Referenzstation nicht vorhanden, nicht zugänglich oder aus anderen Gründen nicht nutzbar, beispielsweise weil hierfür eine entsprechende technische Ausstattung des GPS-Empfängers fehlt, so kann eine mobile Referenzstation 33 verwendet werden, die man an eine bereits exakt vermessene Position in der Nähe bringt, etwa einen Grenzstein, und diese als Referenzstation 33 nutzt, wofür auch eine einfachere Art der drahtlosen Daten Verbindung benutzt werden kann als bei insbesondere den von der öffentlichen Hand betriebenen Referenz-Stationen wie etwa dem deutschen SAPOS-System

Wenn auf diese Art und Weise von der hier am Beginn des Fahrweges dieses Arbeitsauftrages liegenden markanten Stelle, dem Brückengeländer 42a oder dem Hindernis H1, die exakte Position ermittelt wurde oder bekannt ist, kann der Arbeitseinsatz durch automatisches Aufsetzen der beiden Mähköpfe an der exakt richtigen Stelle begonnen werden und durch Verwendung der Weg-Daten und Betriebs-Daten sowie auch der Hindernis-Daten aus dem vorhergehenden Arbeitseinsatz die Mähköpfe 2a, b sehr exakt um das Hindernis herumgeführt werden.

Wenn zusätzlich die zuvor beschriebene Erkennung der Auftreff-Position eines Hindernisses auf der Taststange in Querrichtung durchgeführt wird, können beide Systeme redundant benutzt werden und sich gegenseitig optimieren.

Dies bewirkt, dass mit einer höheren Fahrgeschwindigkeit gefahren werden kann und weniger Arbeitszeit benötigt wird als ohne eine solche Unterstützung, insbesondere bei der Kurvenfahrt mit entlang des Fahrbahnrandes i 40 immer im gleichen Abstand wiederkehrenden Hindernissen Hx.

Zu diesem Zweck besitzt - vorzugsweise wegen der geringeren Erschütterungen auf dem Trägerfahrzeug 7 montiert - das Arbeitsgerät 1 oder das Trägerfahrzeug 7 eine entsprechende technische Ausstattung, nämlich einerseits einen FunkEmpfänger 34 sowie einen D GPS-Empfänger 32, sowie vorzugsweise auch mindestens einen Sensor 30 - etwa Radar, Lidar o. ä. - welches die Umgebung vor und seitlich vor dem Trägerfahrzeug 7 abtasten kann.

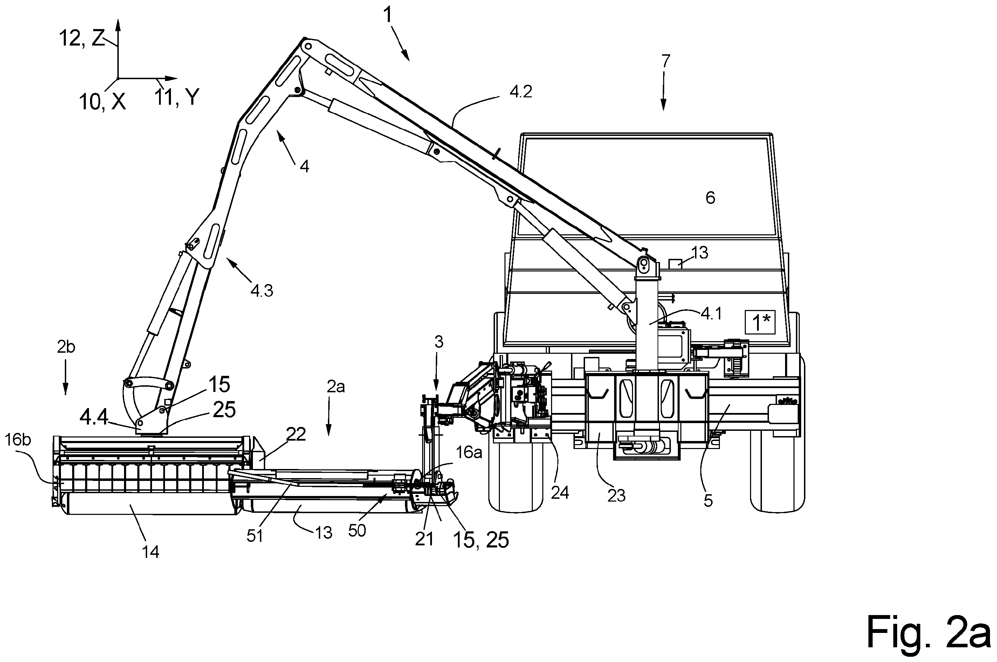

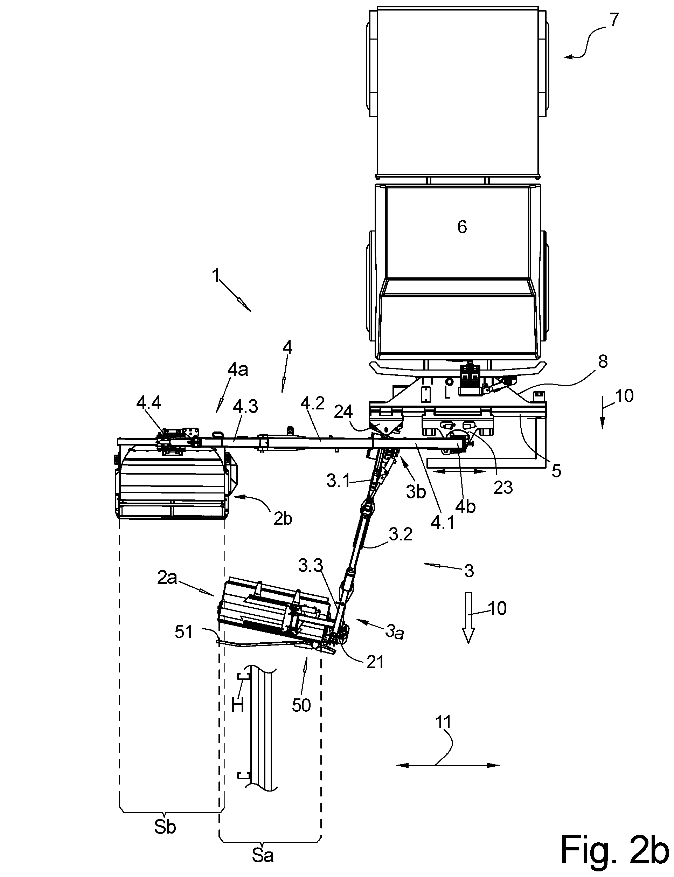

Die **Figuren 2a**, **b** zeigen in Aufsicht und Frontansicht einen einfacheren, aber sehr typischen, weiteren Anwendungsfall einer solchen selbstfahrenden Arbeitsmaschine in Form einer Mähmaschine - wie sie auch in der **Figur 1** vorliegt - im Arbeitseinsatz bestehend aus einem Trägerfahrzeug 7 mit zwei an je einem Auslegerarm 3, 4 an deren freien, vorderen Ende getragenen je einem Mähkopf 2a, b als Arbeitsköpfe:
Jeder Mähkopf 2a bzw. 2b ist von einem daran angeordneten Mähkopf-Motor 21, 22 angetrieben.

Beide Auslegerarme 3, 4 sind mit ihrem hinteren Ende 3b, 4b an einem an der Front des Trägerfahrzeuges 7 befestigten Vorbau 8 befestigt, indem der Vorbau 8 auf seiner Vorderseite eine Querversatzschiene 5 trägt, entlang welcher zwei Verschiebeschuhe 23, 24 unabhängig voneinander in Querrichtung 11 verschiebbar und während des Betriebes gesteuert verfahrbar sind. An jedem Verschiebeschuh 23, 24 ist jeweils einer der Auslegerarme 4, 3 befestigt.

Die Auslegerarme 3, 4 bestehen jeweils aus mehreren Armteilen:
Der Auslegerarm 4 besteht beispielsweise aus einem Armteil 4.1, welches vom Verschiebeschuh 23 etwa in Richtung der Vertikalen 12 nach oben aufragt und um eine Hochachse drehbar ist und von dessen freien Ende ein weiteres Armteil 4.2 abragt und um eine Querachse verschwenkbar ist und an diesem analog wiederum ein weiteres Armteil 4.3.

Die Winkelstellung der Armteile zueinander wird über dazwischen angeordnete Hydraulikzylinder gesteuert, wodurch der jeweilige Mähkopf 2a, b, der zusätzlich gelenkig um ein Z-Gelenk 25 am vorderen Ende des Auslegerarms 4 befestigt ist, in jede gewünschte Lage hinsichtlich der Fahrtrichtung 10 (X-Richtung), der horizontalen Querrichtung 11 (Y-Richtung) hierzu, sowie Drehlage um die Z-Achse 12, die Vertikale, eingestellt werden.

Durch ein in der Regel vorhandenes weiteres X-Gelenk 15 im Auslegerarm 3, 4 nahe dessen freien Endes ist jeder Mähkopf 2a, b zusätzlich schwenkbar um die Fahrtrichtung 10, die X-Achse, und kann damit um alle drei Raumrichtungen verschwenkt werden und in allen drei Raumrichtungen positioniert werden, soweit es die Abmessungen des Auslegerarmes 3, 4 zulassen.

Wie am besten **Figur 2a** zeigt, werden von dem im Fahrerhaus 6 des Trägerfahrzeugs 7 sitzenden Bediener die Mähköpfe 2a, b so gesteuert, dass der innere Mähkopf 2a einen Randstreifenbereich unmittelbar neben dem Trägerfahrzeug 7 mäht und in Fahrtrichtung 10 vor dem Vorbau 8 des Trägerfahrzeuges 7 positioniert ist, während der äußere Mähkopf 2b den daran seitlich anschließenden, weiter außen bezüglich des Trägerfahrzeuges 7 liegenden, Randbereich mäht und in Fahrtrichtung 10 hinter dem ersten Mähkopf 2a, und meist immer noch in Fahrtrichtung 10 vor dem Trägerfahrzeug 7, positioniert ist.

Durch diese Aufteilung können auch Hindernisse H, die im Bereich zwischen den leicht überlappenden Mäh-Spuren Sa, Sb, der beiden Mähköpfe 2a, b liegen, wie etwa Straßenleitpfosten oder Verkehrsschilder, beidseitig ummäht werden.

Zu diesem Zweck ist an der Vorderkante des vorderen Mähkopfes 2a meist eine Taststange 51 vorhanden, die beim Anschlagen an ein solches Hindernis H an den Mähkopf 2a heran geschwenkt wird und dadurch ein Einklappen dieses Mähkopfes 2a um das auf der fahrzeugseitigen Stirnseite dieses Mähkopfes 2a angeordnete Z-Gelenk 25 bezüglich des ihn tragenden Auslegerarmes 3 bewirkt.

In den **Figuren 2a**, **b** ist ferner im Fahrerhaus 6 im Sichtbereich des Bedieners ein Anzeigeelement 13 dargestellt, auf dem die von dem Sensor gemessenen Belastungen auf die Taststange 51 und die daraus von der Steuerung 1* gezogenen Rückschlüsse ausgegeben werden können.

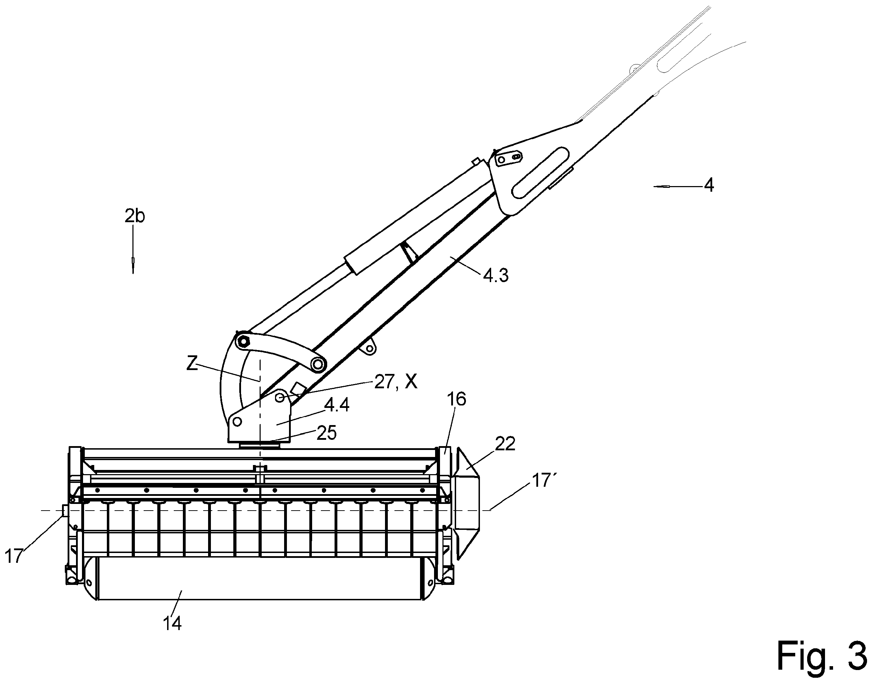

Die **Figur 3** zeigt den weiter außen arbeitenden Mähkopf 2b in vergrößerter Einzeldarstellung einschließlich des Z-Gelenkes 25, wobei die hierfür notwendigen Stellelemente nicht dargestellt sind:
Dieser Mähkopf 2b weist ein Gehäuse 16 auf, welches in der Quermitte über dieses Z-Gelenk 25 um die Z-Achse, die meist eine Hochachse ist, schwenkbar am freien Ende des Auslegerarmes 4 befestigt ist.

Im Inneren des nach unten offenen Gehäuses 16 ist eine Messerwelle 17 mit jedem ihrer beiden Enden um eine Messerwellen-Achse 17' in einem Stirnflansch des Gehäuses 16 gelagert.

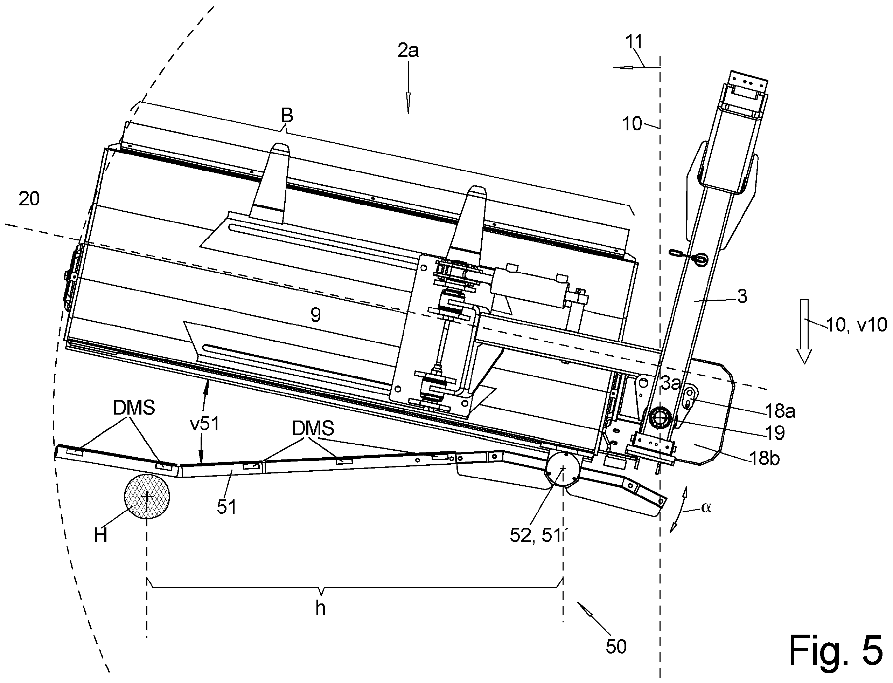

**Figur 5** zeigt in einer vergrößerten Darstellung des Mähkopfes 2a die Hindernis-Einheit 50 mit ihren Details:
Die Taststange verläuft in der Aufsicht betrachtet vor der Front des Gehäuses 9 des Mähkopfes 2a und ist demgegenüber verschwenkbar um eine aufrechte Schwenkachse 51', die sich etwa am inneren, also der Basis des Auslegerarmes und damit dem Träger-Fahrzeug zugewandten Seite der Breite des Arbeitsbereiches des Mähkopfes 2a befindet. Im Arbeitseinsatz, wenn kein Hindernis H vorhanden ist, steht der Mähkopf 2a vorzugsweise mit seiner Haupterstreckungsrichtung 20 nicht exakt lotrecht zur Fahrtrichtung 10, also in Querrichtung 11, sondern mit seinem äußeren freien Ende demgegenüber leicht nacheilend um etwa 10°.

In dieser Ausgangsstellung wird der Mähkopf 2a gehalten, indem er mit seinem Hauptteil um die aufrechte Achse 19 herum nach vorne, also bei Straßen mit Rechtsverkehr entgegen dem Uhrzeigersinn, gegen einen Anschlag am Arm-Ende 18a des Auslegerarmes 3 gedrückt wird.

Die Taststange 51 verläuft meist gerade und parallel zur Front des Gehäuses 9 des Mähkopfes 2a, ist hier jedoch in einer leicht S-förmig geschwungen Variante dargestellt, wobei an der Schwenkachse 51' die Taststange 51 den geringsten Abstand zur Vorderkante des Gehäuses aufweist und die Taststange 51 am radial äußeren, freien Ende den größten Abstand hat.

Dadurch wird ein Schwenkweg von ca. 20° - 25° sichergestellt, bevor die Taststange mittels eines Hindernisses die Front des Gehäuses 9 des Mähkopfes 2a erreicht bzw. kurz vorher gestoppt wird durch einen Anschlag für eine nur begrenzte Beweglichkeit um die aufrechte Achse 51'.

In diesem Fall ist mit der aufrechten Schwenkachse 51' ein Drehwinkel-Sensor 52 gekoppelt, der die Drehbewegung, also Schwenk-Bewegung, der Taststange 51 um die Schwenkachse 51 detektiert, vorzugsweise ständig detektiert, und an die Steuerung der Ausleger-Arbeitsmaschine meldet.

Der in Querrichtung 11 gemessene Abstand zwischen dem Kontaktpunkt, mit dem ein Hindernis H die Taststange 51 kontaktiert, und der aufrechten Schwenkachse 51' korreliert mit dem Schwenkwinkel α bei Auslenkung der Taststange 51 dahingehend, dass die Änderung der Winkelstellung umso schneller stattfindet, je geringer der radiale Abstand h des Hindernisses ist, natürlich bei gleichbleibender Fahrgeschwindigkeit v10.

Ferner zeigt **Figur 5****,** dass von der Schwenkachse 51' aus bis zum freien Ende der Taststange 51 hin in Abständen Dehnungsstreifen (DMS) angeordnet sind, die die Biegebelastung der Taststange 51 um die aufrechte Achse 51' messen.

Damit kann auf das Vorliegen eines singulären oder eines flächigen Hindernisses H geschlossen werden, und bei ausreichender Erstreckung in Querrichtung 11 in etwa die Breite des Hindernisses H und insbesondere das radial innere Ende als auch das äußere Ende des Hindernisses relativ zur Schwenkachse 51' bestimmt werden.

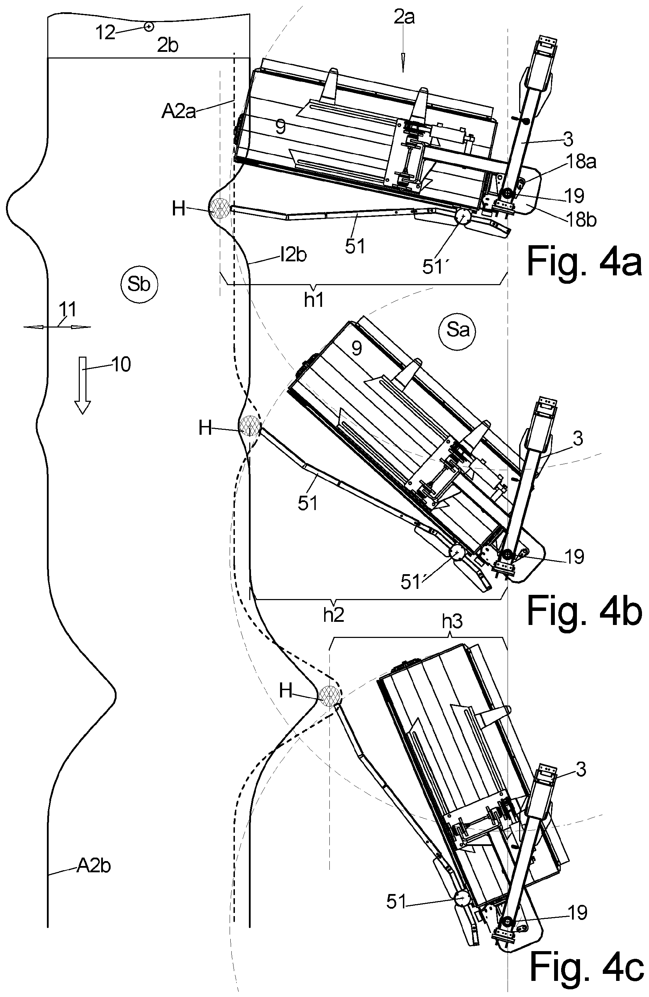

Die **Figuren 4a****,** **b****,** **c** zeigen am Beispiel von singulären, von der Schwenkachse 51' des in Fahrtrichtung 10 bewegten Gehäuses 9 in Querrichtung 11 jedoch unterschiedlich weit entfernten Hindernissen H die mit dieser Ausstattung erzielbaren Bewegungen des mit der Taststange 51 ausgestatteten, innen laufenden Mähkopfes 2a sowie des weiter außen laufenden Mähkopfes 2b.

**Figur 4a** zeigt am Beispiel eines Hindernisses H, an dem mit nur minimaler Auslenkung des Mähkopfes 2a auf der Innenseite vorbei gemäht werden kann, dass - vor dem Hindernis H, also im regulären Mähbetrieb - die Mähspuren Sa, Sb der beiden im Einsatz befindlichen Mähköpfe 2a, b aufgrund entsprechender Steuerung einander überlappen, also die Außenkante A2a des innen laufenden Mähkopfes 2a in Querrichtung 11 etwas weiter außen liegt als die Innenkante I2b des außen laufenden Mähkopfes 2b.

Aus **Figur 4a** wird klar, dass für das Passieren des Hindernisses H auf der Innenseite der innere Mähkopf 2a so gut wie nicht um seine aufrechte Schwenkachse 19 verschwenkt werden muss, da der radiale Abstand h1 des Hindernisses H von der Schwenkachse 51' etwa der Länge der Taststange 51 von dieser Schwenkachse 51' aus entspricht.

Allerdings muss hierfür die Innenkante I2b des äußeren Mähkopfes 2b außen um das Hindernis H herumgeführt werden, um eine Kollision mit dem Hindernis H zu vermeiden, egal ob dies durch Querverlagerung dieses äußeren Mähkopfes 2b in Querrichtung 11 nach außen oder durch Schrägstellung dieses Mähkopfes um eine aufrechte Achse, nämlich seine Z-Achse 12, geschieht.

In **Figur 4b** ist das Hindernis H in Querrichtung 11 etwas näher am Auslegerarm 3 und der aufrechten Achse 19 positioniert, um die der innen laufende Mähkopf 2a verschwenkt werden kann, nämlich im radialen Abstand h2 zur Schwenkachse 51', sodass die Taststange 51 vollständig bis zu ihrer Maximalstellung ausgelenkt wird und der Mähkopf 2a im Uhrzeigersinn um die aufrechte Achse 19 gegenüber dem Auslegerarm 3 verschwenkt wird, wobei allerdings ersichtlich ist, dass die Außenkante A2a seiner Mähspur Sa erst kurz vor dem Hindernis H in Querrichtung 11 nach innen wandert und die Auslenkung aus der normalen Richtung der Außenkante A2a auch in Längsrichtung 10 nur kurz ist.

Die Innenkante I2b des äußeren Mähkopfes 2b muss in diesem Fall nur noch sehr wenig in Querrichtung 11 nach außen um das Hindernis H herum verfahren werden und auch in Fahrtrichtung 10 über eine damit nur sehr kurze Strecke.

Anders dagegen bei **Figur 4c****,** bei dem das Hindernis H noch näher in Querrichtung 11 an der Linie, die die aufrechte Schwenkachse 19 des Mähkopfes 2a fährt, positioniert ist, und zwar im Abstand h3 zur Schwenkachse 51':
Der innere Mähkopf 2a wird analog sehr eng auf der Innenseite um das Hindernis H herumgeführt, wobei aufgrund der Bekanntheit der Querposition des Hindernisses H und auch seiner Position in Fahrtrichtung 10 die Auslenkung der Außenkante A2a nur über eine kurze Strecke in Längsrichtung 10 notwendig ist.

Die Innenkante I2b des äußeren Mähkopfes 2b wird dagegen nun in Querrichtung nach innen verlagert um auf der Außenseite des Hindernisses H keine große ungemähte Fläche als Mähschatten MS zurück zu lassen.

Natürlich bewirkt dies auch in der Außenkante A2b der Mähspur Sb des äußeren Mähkopfes 2b eine Abweichung von der Geraden in Längsrichtung 10, jedoch wird dies als das kleinere Übel gesehen, da diese Außenkante A2b weiter vom Fahrbahnrand entfernt ist und die Sichtbarkeit des Hindernisses H, beispielsweise eines Verkehrsschildes oder eines Straßen-Leitpfostens, nicht behindert.

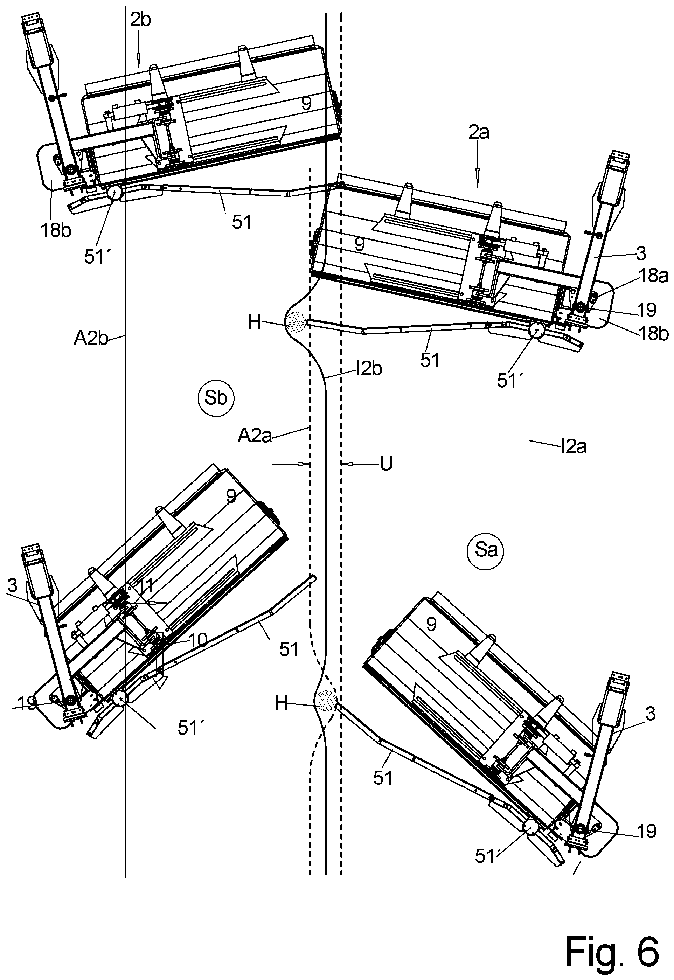

**Figur 6** zeigt, wie beim Mähen mit einem Tandem-Mäher der verbleibende Mähschatten MS am Hindernis H reduziert werden kann:
Wenn dabei an jedem der beiden Auslegerarme 3, 4 ein Mähkopf 2a, b mit einer Taststange 51 an seiner Front befestigt ist, und zwar so, dass die beiden Mähköpfe 2a, b mit ihrem freien, also von der Befestigung am Auslegerarm 3, 4 abgewandten, Ende den überlappenden Bereich Ü der beiden Mähspuren Sa, Sb mähen, kann bei Bedarf jeder der beiden Mähköpfe 2a, b um seine aufrechte Achse 19 herum ausgelenkt werden, - wie die Schwenkarme bei einem Flipper-Automaten - wenn ein Hindernis H auf seiner Mähspuren Sa, Sb auftaucht und die Taststange 51 betätigt, was deshalb als "Flipperbetrieb" bezeichnet wird.

Wie an dem in **Figur 6** oberen Hindernis erkennbar, kann das Hindernis H in Querrichtung 11 so liegen, dass der eine Mähkopf 2a gerade noch daran vorbeigefahren werden kann ohne zu verschwenken, der andere Mähkopf 2b dagegen verschwenkt werden muss.

Dann verbleibt vor und hinter dem Hindernis H ein jeweils etwa dreieckiger Mähschatten MS ungemäht.

Eine Verbesserung wird vor allem dann erzielt, wenn sich das Hindernis H im Überlappungsbereich Ü befindet - wie am unteren Hindernis H dargestellt - also für das Umfahren beide Mähköpfe 2a, b verschwenkt werden müssen.

Wie ersichtlich verbleibt dann ebenfalls vor und nach dem Hindernis H jeweils ein dreieckiger Mähschatten MS, der jedoch jeweils kleiner ist als am darüber dargestellten oberen Hindernis H.

### BEZUGSZEICHENLISTE

- 1: Arbeitsmaschine, Ausleger-Arbeitsmaschine
- 2, 2a, b: Arbeitskopf, Mähkopf
- 3, 4: Auslegerarm
- 3a: vorderes Ende
- 3b: hinteres Ende
- 3.1/.2/.3: Armteil
- 4a: vorderes Ende
- 4b: hinteres Ende
- 4.1/.2/.3/.4: Armteil
- 5: Querversatzschiene
- 6: Fahrerkabine
- 7: Trägerfahrzeug
- 8: Vorbau
- 9: Gehäuse
- 10: Fahrtrichtung, X-Richtung
- 11: Querrichtung zur Fahrtrichtung, Y-Richtung
- 12: Vertikale, Z-Richtung
- 13: Tastwalze
- 14: Tastwalze
- 15: X-Gelenk
- 16: Gehäuse
- 17: Messerwelle
- 17': Messerwellen-Achse
- 18a: Armende
- 18b: Kopfende
- 19: aufrechte Schwenkachse
- 20: Haupt-Erstreckungsrichtung von 2a
- 21: Mähkopf-Motor
- 22: Mähkopf-Motor
- 23: Verschiebeschuh
- 24: Verschiebeschuh
- 25: Z-Gelenk
- 26: Zusatz-Mähwerk
- 27: Messer
- 28: Schwingenarm
- 29: Schutzring
- 30: Sensor
- 31: GPS-Empfänger
- 32: DGPS Empfänger
- 33: Referenzstation
- 34: Funkempfänger
- 35: Internetanschluss

- 40: Fahrbahnrand
- 41: Einmündung
- 42: Brücke
- 42a: Brücken-Geländer
- 43: Gewässer

- 50: Hindernis-Einheit
- 51: Taststange
- 51': Schwenkachse
- 52: Schwenk-Sensor

- 100: Arbeitssystem
- 100*: Steuerung

- B: Arbeitsbreite
- DMS: Dehnmessstreifen
- h, h1, h2: radialer Abstand
- H1, H2, H3: Hindernis, markante Stelle
- MS: Mähschatten
- Sa, Sb: Mäh-Spur
- Ü: Überlappungsbereich
- v10: Geschwindigkeit Arbeitskopf in Richtung 10
- v51: Drehgeschwindigkeit um 51'

## Patentansprüche

1. **Verfahren** zum Steuern eines Arbeitssystems (100) mit
- wenigstens einer sich in einer Umgebung, insbesondere im Freien, bewegenden, selbstfahrenden oder auf einem Trägerfahrzeug (7) montierten, Arbeitsmaschine,
- die mindestens einen 1. Arbeitskopf (2a) der Arbeitsmaschine (1) aufweist,
- einer Steuerung zum Steuern des Arbeitssystems,
- von dem Arbeitssystem in Zusammenhang mit oder bei einem Arbeitseinsatz ermittelte und/oder von extern erhaltene, absolute und/oder relative Erstfahrt-Daten gespeichert werden,
- die Erstfahrt-Daten mit genutzt werden
- für die datentechnische Beschreibung der Umgebung und/oder
- für die Planung und/oder Steuerung eines weiteren ähnlichen oder identischen Arbeitseinsatzes derselben Arbeitsmaschine (1),
- die Arbeitsmaschine ferner mindestens einen, örtlich oder zeitlich versetzt zum 1. Arbeitskopf (2a) arbeitenden und unabhängig vom 1. Arbeitskopf steuerbaren, 2. Arbeitskopf (2b) der Arbeitsmaschine (1) aufweist,
**dadurch gekennzeichnet, dass**
- von dem mindestens einen 1. Arbeitskopf (2a) her bekannte Erstfahrt-Daten sofort für die Steuerung des mindestens einen 2. Arbeitskopfes (2b) bei demselben Arbeitseinsatz genutzt werden.

2. Verfahren nach Anspruch 1,
**dadurch gekennzeichnet, dass**
die bei diesem Arbeitseinsatz ermittelten Erstfahrt-Daten umfassen
- Weg-Daten des daran beteiligten wenigstens 1. Arbeitskopfes über die Zeit des Arbeitseinsatzes, entweder in relativen Koordinaten zum Fahrgestell der Arbeitsmaschine oder in absoluten Raum-Koordinaten, insbesondere umfassend die Fahr-Geschwindigkeit des daran beteiligten wenigstens 1. Arbeitskopfes
- insbesondere einschließlich der damit gekoppelten absoluten Uhrzeit oder eines anderen Kopplungs-Parameters,
und/oder
- Betriebs-Daten des daran beteiligten wenigstens 1. Arbeitskopfes, insbesondere einschließlich der Stellelement-Daten der Stellelemente des beteiligten wenigstens 1. Arbeitskopfes und/oder eines ihn tragenden Auslegerarmes über die Zeit des Arbeitseinsatzes und/oder einschließlich der Leistung des Antriebes des beteiligten wenigstens 1. Arbeitskopfes über die Zeit des Arbeitseinsatzes
und/oder
- Umgebungs-Daten betreffend die Umgebung entlang des Weges des beteiligten wenigstens 1. Arbeitskopfes und insbesondere Hindernisse im Weg des 1. Arbeitskopfes während seines Arbeitseinsatzes, einschließlich der ermittelten Positions-Daten des Hindernisses.

3. Verfahren nach einem der vorhergehenden Ansprüche,
**dadurch gekennzeichnet, dass**
die bei diesem Arbeitseinsatz des beteiligten wenigstens 1. Arbeitskopfes ermittelten Erstfahrt-Daten umfassen
- Weg-Daten des Fahrgestells der Arbeitsmaschine über die Zeit des Arbeitseinsatzes des beteiligten wenigstens 1. Arbeitskopfes, entweder in relativen Koordinaten zu einem Referenzpunkt in der Umgebung oder in absoluten Raum-Koordinaten, insbesondere die Fahr-Geschwindigkeit der Arbeitsmaschine,
- insbesondere einschließlich der damit gekoppelten absoluten Uhrzeit oder eines anderen Kopplungs-Parameters,
und/oder
- Betriebs-Daten des Fahrgestells, insbesondere einschließlich der Antriebs-Daten des Fahrgestells über die Zeit des Arbeitseinsatzes der Arbeitsmaschine und/oder der Lenk-Daten der Lenkung des Fahrgestells über die Zeit des Arbeitseinsatzes der Arbeitsmaschine
und/oder
- Umgebungs-Daten betreffend die Umgebung entlang des Weges des Fahrgestells und insbesondere Hindernisse im Weg des Fahrgestells während dieses Arbeitseinsatzes, einschließlich der ermittelten Positions-Daten des Hindernisses.

4. Verfahren nach einem der vorhergehenden Ansprüche,
**dadurch gekennzeichnet, dass**
die Umgebungs-Daten umfassen
- die von mindestens einem EM-Sensor aufgezeichnete, von Gegenständen der Umgebung reflektierte, elektromagnetische Strahlung wie etwa Infrarotstrahlung, Radarstrahlung, Ultraschallstrahlung, Mikrowellenstrahlung, die insbesondere von einem EM-Sensor ausgestrahlt wurde,
- insbesondere einschließlich der damit gekoppelten absoluten Uhrzeit oder eines anderen Kopplungs-Parameters,
- wobei der EM-Sensor insbesondere ein Radar-Sensor und/oder ein Lidar-Sensor und/oder eine Wärmebild-Kamera und/oder eine Kamera für sichtbares Licht ist.

5. Verfahren nach einem der vorhergehenden Ansprüche,
**dadurch gekennzeichnet, dass**
die bei diesem Arbeitseinsatz des 1. Arbeitskopfes von extern erhaltenen Erstfahrt-Daten umfassen
- GPS-Daten, insbesondere Differential-GPS-Daten hinsichtlich des Fahrweges des Fahrgestells und/oder des beteiligten wenigstens 1. Arbeitskopfes während dessen Arbeitseinsatz,
und/oder
- Funkzellen-Daten eines Mobilfunk-Netzes, über welches insbesondere die Arbeitsmaschine mit einer Zentrale in Verbindung steht
und/oder
- Korrekturdaten, die von einer terrestrischen Referenz-Station eines DGPS-Systems erhalten werden
und/oder
- Korrekturdaten, die von einer eigenen, mobilen, an definierter Position installierten, Referenz-Station eines DGPS-Systems erhalten werden
- jeweils insbesondere einschließlich der damit gekoppelten absoluten Uhrzeit oder eines anderen Kopplungs-Parameters.

6. Verfahren nach einem der vorhergehenden Ansprüche,
**dadurch gekennzeichnet, dass**
a) von wenigstens einer markanten Stelle auf oder nahe dem Fahrweg eines Arbeitskopfes oder des Fahrgestells der Arbeitsmaschine, vorzugsweise nahe am Beginn des Fahrweges, die exakte Position bestimmt wird, insbesondere mittels DGPS, oder beschafft wird,
b) davon ausgehend die Positionen von Elementen auf oder nahe dem Fahrweg, insbesondere während des Arbeitseinsatzes des beteiligten wenigstens 1. Arbeitskopfes, mithilfe der Weg-Daten des Arbeitskopfes und/oder des Fahrgestells durch weiterrechnen bestimmt werden,
c) insbesondere bis zu einer weiteren markanten Stelle auf oder nahe dem Fahrweg, vorzugsweise nahe des Endes des Fahrweges, dessen exakte Position bekannt ist oder beschafft werden kann oder bestimmt werden kann, insbesondere mittels DGPS.

7. Verfahren nach Anspruch 6,
**dadurch gekennzeichnet, dass**
die exakte Position der markanten Stelle bestimmt wird durch Aufstellen einer mobilen terrestrischen Referenzstation an oder auf der markanten Stelle.

8. Verfahren nach Anspruch 6 oder 7, wenn diese Schritt c) aus Anspruch 6 umfassen,
**dadurch gekennzeichnet, dass**
- die mittels der weiterberechneten Weg-Daten gemäß Schritt b) ermittelte Position der weiteren markanten Stelle verglichen wird mit der exakten Position gemäß Schritt c),
- damit Korrekturdaten für die Positionen der gemäß Schritt b) zunächst errechneten Positions-Daten ermittelt werden und die zunächst errechneten Positions-Daten damit korrigiert werden,
- für einen erneuten Arbeitseinsatz des gleichen oder eines anderen Arbeitsgeräteses in der gleichen Umgebung vorzugsweise die korrigierten Positions-Daten zugrunde gelegt werden,
- bei ähnlichen Arbeitsbedingungen hinsichtlich Wetter, insbesondere Temperatur und Nässe, wie bei dem Arbeitseinsatz, bei dem die Daten ermittelt wurden, die unkorrigierten Position-Daten verwendet werden.

9. Verfahren nach einem der vorhergehenden Ansprüche,
**dadurch gekennzeichnet, dass**
- die bei mehreren identischen Arbeits-Einsätzen ermittelten Daten verglichen und für die zukünftige Verwendung vorzugsweise interpoliert werden,
- insbesondere die bei mehreren räumlich im gleichen Bereich stattfindenden oder identischen Arbeits-Einsätzen ermittelten GPS-Daten von markanten Stellen oder Objekten ermittelt und vorzugsweise interpoliert werden.

10. **Arbeitssystem** (100) mit
- wenigstens einer sich in einer Umgebung, insbesondere im Freien, bewegenden, selbstfahrenden oder auf einem Trägerfahrzeug (7) montierten, Arbeitsmaschine (1),
- wenigstens einem 1. Arbeitskopf (2a) der Arbeitsmaschine (1),
- wenigstens einem Sensor (30), um die im Zusammenhang mit dem Arbeitseinsatz des 1. Arbeitskopfes zu ermittelnden Daten zu ermitteln,
- einer Steuerung (100*), insbesondere mit einem Datenspeicher zumindest für die ermittelten Daten, zum Steuern des Arbeitssystems (100), wobei das Arbeitssystem (100) ferner wenigstens einen, örtlich oder zeitlich versetzt zum 1. Arbeitskopf (2a) arbeitenden und vom 1. Arbeitskopf unabhängig steuerbaren 2. Arbeitskopf (2b) der Arbeitsmaschine (1) umfasst,
**dadurch gekennzeichnet, dass**
- die Steuerung (100*) ausgebildet ist, um das Verfahren nach einem der vorhergehenden Ansprüche durchzuführen.

11. Arbeitssystem nach Anspruch 10,
**dadurch gekennzeichnet, dass**
das Arbeitssystem (100), insbesondere jede Arbeitsmaschine (1) und oder jeder Arbeitskopf (2a, b), umfassen
- einen GPS-Empfänger (31)
und/oder
- einen DGPS- Empfänger (32)
und/oder
- eine mobile terrestrische Referenz-Station (33)
und/oder
- einen Datenspeicher für ermittelte oder von extern empfangenen Daten
und/oder
- eine Recheneinheit zum Ermitteln von Korrektur-Daten
und/oder
- einen Funkempfänger (34) oder einen Internetanschluss (35), insbesondere zum Empfangen von Korrekturwerten von terrestrischen Referenzstationen (33), insbesondere dem deutschen Sapos-System
und/oder
- einen Empfänger für, von einem Hindernis oder dem Untergrund oder den Bewuchs ermittelte, elektromagnetische Strahlung, insbesondere eine Kamera für sichtbares Licht oder Infrarot-Licht
und/oder
- einem Sender zum Aussenden von elektromagnetischer Strahlung.

## Claims

1. Method for controlling a working system (100) comprising
- at least one working machine which moves in an environment, in particular outdoors, and is self-propelled or mounted on a carrier vehicle (7),
- which has at least one first working head (2a) of the working machine (1),
- a controller for controlling the working system,
- absolute and/or relative initial-run data determined by the working system in connection with or during a work operation and/or received from an external source are stored,
- the initial-run data are additionally used
- for the data-based description of the environment, and/or
- for the planning and/or control of a further similar or identical work operation of the same working machine (1),
- the working machine further having at least one second working head (2b) of the working machine (1), which works in a locally or temporally offset manner from the first working head (2a) and is independently controllable from the first working head,
**characterised in that**
- initial-run data known from the at least one first working head (2a) are immediately used for the control of the at least one second working head (2b) in the same work operation.

2. Method according to Claim 1,
**characterised in that**
the initial-run data determined during said work operation comprise
- path data of the at least first working head involved, over the duration of the work operation, either in relative coordinates with respect to the chassis of the working machine or in absolute spatial coordinates, in particular comprising the travel speed of the at least first working head involved,
- in particular including the associated absolute time or another coupling parameter,
and/or
- operating data of the at least first working head involved, in particular including the actuator data of the actuators of the at least first working head involved and/or of a boom arm carrying it, over the duration of the work operation, and/or including the power of the drive of the at least first working head involved over the duration of the work operation,
and/or
- environment data relating to the environment along the path of the at least first working head involved and in particular obstacles in the path of the first working head during its work operation, including the determined position data of the obstacle.

3. Method according to any one of the preceding claims,
**characterised in that**
the initial-run data determined during said work operation of the at least first working head involved comprise
- path data of the chassis of the working machine over the duration of the work operation of the at least first working head involved, either in relative coordinates with respect to a reference point in the environment or in absolute spatial coordinates, in particular the travel speed of the working machine,
- in particular including the associated absolute time or another coupling parameter,
and/or
- operating data of the chassis, in particular including the drive data of the chassis over the duration of the work operation of the working machine and/or the steering data of the steering of the chassis over the duration of the work operation of the working machine,
and/or
- environment data relating to the environment along the path of the chassis and in particular obstacles in the path of the chassis during said work operation, including the determined position data of the obstacle.

4. Method according to any one of the preceding claims,
**characterised in that**
the environment data comprise
- electromagnetic radiation recorded by at least one EM sensor and reflected by objects in the environment, such as infrared radiation, radar radiation, ultrasonic radiation, microwave radiation, which in particular was emitted by an EM sensor,
- in particular including the associated absolute time or another coupling parameter,
- wherein the EM sensor is in particular a radar sensor and/or a lidar sensor and/or a thermal-imaging camera and/or a camera for visible light.

5. Method according to any one of the preceding claims,
**characterised in that**
the initial-run data received from an external source during said work operation of the first working head comprise
- GPS data, in particular differential GPS data relating to the travel path of the chassis and/or of the at least first working head involved during its work operation,
and/or
- radio cell data of a mobile radio network via which in particular the working machine communicates with a control centre,
and/or
- correction data received from a terrestrial reference station of a DGPS system, and/or
- correction data received from a dedicated mobile reference station of a DGPS system installed at a defined position,
- in each case in particular including the associated absolute time or another coupling parameter.

6. Method according to any one of the preceding claims,
**characterised in that**
a) the exact position is determined from at least one prominent point on or near the travel path of a working head or the chassis of the working machine, preferably near the beginning of the travel path, in particular by means of DGPS, or is obtained,
b) proceeding therefrom, the positions of elements on or near the travel path, in particular during the work operation of the at least first working head involved, are determined by onward calculation with the aid of the path data of the working head and/or the chassis,
c) in particular up to a further prominent point on or near the travel path, preferably near the end of the travel path, the exact position of which is known or can be obtained or can be determined, in particular by means of DGPS.

7. Method according to Claim 6,
**characterised in that**
the exact position of the prominent point is determined by setting up a mobile terrestrial reference station at or on the prominent point.

8. Method according to Claim 6 or 7, if these comprise step c) of claim 6,
**characterised in that**
- the position of the further prominent point determined by means of the onward-calculated path data according to step b) is compared with the exact position according to step c),
- correction data for the positions of the position data initially calculated according to step b) are thereby determined and the initially calculated position data are corrected accordingly,
- for a renewed work operation of the same or a different working installation in the same environment, preferably the corrected position data are used as a basis,
- under similar working conditions with regard to weather, in particular temperature and moisture, as in the work operation during which the data were determined, the uncorrected position data are used.

9. Method according to any one of the preceding claims,
**characterised in that**
- the data determined during several identical work operations are compared and preferably interpolated for future use,
- in particular the GPS data of prominent points or objects determined during several work operations taking place spatially in the same area or being identical are determined and preferably interpolated.

10. Working system (100) comprising
- at least one working machine (1) moving in an environment, in particular outdoors, self-propelled or mounted on a carrier vehicle (7),
- at least one first working head (2a) of the working machine (1),
- at least one sensor (30) for determining the data to be determined in connection with the work operation of the first working head,
- a controller (100*), in particular with a data store at least for the determined data, for controlling the working system (100),
wherein the working system (100) further comprises at least one second working head (2b) of the working machine (1), which works in a locally or temporally offset manner from the first working head (2a) and is independently controllable from the first working head,
**characterised in that**
the controller (100*) is configured to carry out the method according to any one of the preceding claims.

11. Working system according to Claim 10,
**characterised in that**
the working system (100), in particular each working machine (1) and/or each working head (2a, b), comprise
- a GPS receiver (31)
and/or
- a DGPS receiver (32)
and/or
- a mobile terrestrial reference station (33)
and/or
- a data store for determined or externally received data
and/or
- a computing unit for determining correction data
and/or
- a radio receiver (34) or an internet connection (35), in particular for receiving correction values from terrestrial reference stations (33), in particular the German SAPOS system,
and/or
- a receiver for electromagnetic radiation detected from an obstacle or the ground or vegetation, in particular a camera for visible light or infrared light, and/or
- a transmitter for emitting electromagnetic radiation.

## Revendications

1. Procédé de commande d'un système de travail (100) comprenant
- au moins une machine de travail se déplaçant dans un environnement, en particulier à l'extérieur, automotrice ou montée sur un véhicule porteur (7),
- ladite machine de travail (1) comprenant au moins une 1^{ère} tête de travail (2a),
- une unité de commande pour commander le système de travail,
dans lequel
- des données absolues et/ou relatives concernant le premier déplacement, déterminées par le système de travail en relation avec ou lors d'une opération de travail, et/ou obtenues de source externe, sont stockées,
- les données concernant le premier déplacement sont également utilisées
- pour la description informatique de l'environnement et/ou
- pour la planification et/ou la commande d'une autre opération de travail similaire ou identique de la même machine de travail (1),
- la machine de travail (1) comporte en outre au moins une 2^{ième} tête de travail (2b) qui fonctionne de manière décalée dans l'espace ou dans le temps par rapport à la 1^{ère} tête de travail (2a) et qui peut être commandée indépendamment de la 1^{ère} tête de travail,
**caractérisé en ce que**
- les données concernant le premier déplacement qui sont connues grâce à ladite au moins une 1^{ère} tête de travail (2a) sont immédiatement utilisées pour commander ladite au moins une 2^{ième} tête de travail (2b) lors de la même opération de travail.

2. Procédé selon la revendication 1,
**caractérisé en ce que** les données concernant le premier déplacement, déterminées lors de cette opération de travail, comprennent
- des données de trajet de ladite au moins une 1^{ère} tête de travail impliquée pendant la durée de l'opération de travail, soit en coordonnées relatives par rapport au châssis de la machine de travail, soit en coordonnées spatiales absolues, comprenant en particulier la vitesse de déplacement de ladite au moins une 1^{ère} tête de travail impliquée,
- en particulier comprenant l'heure absolue qui y est couplée ou un autre paramètre de couplage,
et/ou
- des données de fonctionnement de ladite au moins une 1^{ère} tête de travail impliquée, comprenant en particulier des données des éléments de positionnement de ladite au moins une 1^{ère} tête de travail impliquée et/ou d'un bras articulé la supportant pendant la durée de l'opération de travail, et/ou comprenant la puissance de l'entraînement de ladite au moins une 1^{ère} tête de travail impliquée pendant la durée de l'opération de travail,
et/ou
- des données environnementales concernant l'environnement le long du trajet de ladite au moins une 1^{ère} tête de travail et en particulier les obstacles sur le trajet de la 1^{ère} tête de travail pendant son opération de travail, y compris les données de position déterminées de l'obstacle.

3. Procédé selon l'une des revendications précédentes,
**caractérisé en ce que** les données concernant le premier déplacement, déterminées lors de cette opération de travail de ladite au moins une 1^{ère} tête de travail impliquée, comprennent :
- les données de trajet du châssis de la machine de travail pendant la durée de l'opération de travail de ladite au moins une 1^{ère} tête de travail impliquée, soit en coordonnées relatives par rapport à un point de référence dans l'environnement, soit en coordonnées spatiales absolues, en particulier la vitesse de déplacement de la machine de travail,
- comprenant en particulier l'heure absolue qui y est couplée ou un autre paramètre de couplage,
et/ou
- des données de fonctionnement du châssis, comprenant en particulier les données d'entraînement du châssis pendant la durée de l'opération de travail de la machine de travail et/ou les données de la direction du châssis pendant la durée de l'opération de travail de la machine de travail,
et/ou
- des données environnementales concernant l'environnement le long du trajet du châssis et en particulier les obstacles sur le trajet du châssis pendant cette opération de travail, y compris les données de position déterminées de l'obstacle.

4. Procédé selon l'une des revendications précédentes,
**caractérisé en ce que** les données environnementales comprennent
- le rayonnement électromagnétique, tel qu'un rayonnement infrarouge, un rayonnement radar, un rayonnement ultrasonore, un rayonnement micro-ondes, qui est réfléchi par des objets dans l'environnement et enregistré par au moins un capteur électromagnétique, et qui a notamment été émis par un capteur électromagnétique,
- comprenant en particulier l'heure absolue qui y est couplée ou un autre paramètre de couplage,
- en particulier, le capteur électromagnétique étant un capteur radar et/ou un capteur lidar et/ou une caméra thermique et/ou une caméra pour la lumière visible.

5. Procédé selon l'une des revendications précédentes,
**caractérisé en ce que**
les données concernant le premier déplacement, obtenues d'une source externe lors de cette opération de travail de la 1^{ère} tête de travail, comprennent
- des données GPS, en particulier des données GPS différentielles concernant le trajet de déplacement du châssis et/ou de ladite au moins une 1^{ère} tête de travail impliquée pendant son opération de travail,
et/ou
- des données de cellules radio d'un réseau de téléphonie mobile, par l'intermédiaire duquel la machine de travail est notamment en communication avec une centrale,
et/ou
- des données de correction obtenues à partir d'une station de référence terrestre d'un système GPS différentiel,
et/ou
- des données de correction obtenues à partir d'une station de référence mobile propre, installée à une position définie, d'un système GPS différentiel,
- comprenant en particulier l'heure absolue qui y est couplée ou un autre paramètre de couplage.

6. Procédé selon l'une des revendications précédentes,
**caractérisé en ce que**
a) la position exacte d'au moins un point de repère situé sur ou à proximité du trajet de déplacement d'une tête de travail ou du châssis de la machine de travail, de préférence à proximité du début du trajet de déplacement, est déterminée, en particulier au moyen du GPS différentiel, ou est obtenue d'une autre manière,
b) à partir de celle-ci, les positions d'éléments situés sur ou à proximité du trajet de déplacement, en particulier pendant l'opération de travail de ladite au moins une 1^{ère} tête de travail impliquée, sont déterminées par calcul à l'aide des données de trajet de la tête de travail et/ou du châssis,
c) en particulier jusqu'à un autre point de repère situé sur ou à proximité du trajet de déplacement, de préférence à proximité de la fin du trajet de déplacement, dont la position exacte est connue, peut être obtenue d'une autre manière ou peut être déterminée, en particulier au moyen du GPS différentiel.

7. Procédé selon la revendication 6,
**caractérisé en ce que**
la position exacte du point de repère est déterminée par l'installation d'une station de référence terrestre mobile au niveau ou sur le point de repère.

8. Procédé selon la revendication 6 ou 7, comprennent l'étape c) de la revendication 6,
**caractérisé en ce que**
- la position de l'autre point de repère, déterminée à l'aide des données de trajet calculées conformément à l'étape b), est comparée à la position exacte définie conformément à l'étape c),
- moyennant quoi des données de correction pour les positions des données de position d'abord calculées conformément à l'étape b) sont déterminées, et les données de position d'abord calculées sont ainsi corrigées,
- de préférence, les données de position corrigées sont prises pour base pour une nouvelle opération de travail du même appareil de travail ou d'un autre appareil de travail dans le même environnement, et
- les données de position non corrigées sont utilisées dans des conditions de travail similaires en termes de météo, en particulier en termes de température et d'humidité, à celles de l'opération de travail au cours de laquelle les données ont été déterminées.

9. Procédé selon l'une des revendications précédentes,
**caractérisé en ce que**
- les données déterminées lors de plusieurs opérations de travail identiques sont comparées et, de préférence, interpolées en vue d'une utilisation future,
- en particulier les données GPS de points de repère ou d'objets de repère, déterminées lors de plusieurs opérations de travail identiques ou se déroulant dans la même zone géographique, sont déterminées et, de préférence, interpolées.

10. Système de travail (100) comprenant
- au moins une machine de travail (1) se déplaçant dans un environnement, en particulier à l'extérieur, automotrice ou montée sur un véhicule porteur (7),
- ladite machine de travail (1) comprenant au moins une 1^{ère} tête de travail (2a),
- au moins un capteur (30) destiné à déterminer les données à déterminer en relation avec l'opération de travail de la 1^{ère} tête de travail,
- une commande (100*), comprenant en particulier une mémoire de données au moins pour les données déterminées, destinée à commander le système de travail (100),
le système de travail (100) comprenant en outre au moins une 2^{ième} tête de travail (2b) de la machine de travail (1), qui fonctionne de manière décalée dans l'espace ou dans le temps par rapport à la 1^{ère} tête de travail (2a) et peut être commandée indépendamment de la 1^{ère} tête de travail,
**caractérisé en ce que**
- la commande (100*) est conçue pour mettre en oeuvre le procédé selon l'une des revendications précédentes.

11. Système de travail selon la revendication 10,
**caractérisé en ce que** le système de travail (100), en particulier chaque machine de travail (1) et/ou chaque tête de travail (2a, b), comprend
- un récepteur GPS (31),
et/ou
- un récepteur GPS différentiel (32),
et/ou
- une station de référence terrestre mobile (33),
et/ou
- une mémoire de données pour les données déterminées ou reçues d'une source externe,
et/ou
- une unité de calcul pour déterminer des données de correction,
et/ou
- un récepteur radio (34) ou une connexion Internet (35), en particulier pour recevoir des valeurs de correction provenant de stations de référence terrestres (33), en particulier du système allemand Sapos,
et/ou
- un récepteur de rayonnement électromagnétique détecté provenant d'un obstacle ou du sol ou de la végétation, en particulier une caméra pour la lumière visible ou la lumière infrarouge,
et/ou
- un émetteur destiné à émettre du rayonnement électromagnétique.
